# FASCICULE DE BREVET EUROPEEN

(11) **EP 2 941 821 B1**
(45) Date de publication et mention de la délivrance du brevet: **26.02.2020**
(21) Numéro de dépôt: 13785495.6
(22) Date de dépôt: 27.09.2013
(51) Int. Cl.: H02M 1/08, H02M 3/156, B60R 16/03

(54) **DISPOSITIF D'ALIMENTATION POUR ALIMENTER UN RÉSEAU DE BORD D'UN VÉHICULE EN ÉNERGIE ÉLECTRIQUE**
STROMVERSORGUNGSEINHEIT ZUR STROMVERSORGUNG EINES AN BORD EINES FAHRZEUGS BEFINDLICHEN ELEKTRISCHEN NETZWERKES
POWER SUPPLY UNIT FOR SUPPLYING POWER AN ON-BOARD ELECTRICAL NETWORK OF A VEHICLE

(30) Priorité: 02.10.2012 FR 1259318; 05.10.2012 FR 1259468; 10.10.2012 FR 1259667; 10.10.2012 FR 1259670; 16.10.2012 FR 1259837
(43) Date de publication de la demande: 11.11.2015
(73) Titulaire: Technoboost, 75116 Paris (FR)
(72) Inventeur: BOUCLY, Bernard, F-78150 Le Chesnay (FR); LECRUX, Eric, F-78125 La Boissière École (FR); DA CRUZ PEREIRA, Serge, F-95310 Saint Ouen l'Aumone (FR); MIZWICKI, Eric, F-95180 Menucourt (FR)
(74) Mandataire: Ménès, Catherine
(86) Numéro de dépôt international: PCT/FR2013/052285
(87) Numéro de publication internationale: WO 2014/053749

(56) Documents cités:
- FR-A1- 2 970 094
- FR-A1- 2 970 094
- US-A- 5 793 191
- US-A- 5 793 191
- US-A1- 2009 257 257
- US-B2- 7 933 132
- US-B2- 7 933 132
- SCORTARU P ET AL: "Reversible DC-to-DC converter for a dual voltage automotive system using zero voltage switching technique", OPTIMIZATION OF ELECTRICAL AND ELECTRONIC EQUIPMENT, 2008. OPTIM 2008. 11TH INTERNATIONAL CONFERENCE ON, IEEE, PISCATAWAY, NJ, USA, 22 May 2008 (2008-05-22), pages 251-258, XP031341216, ISBN: 978-1-4244-1544-1

## Description

La présente invention concerne de manière générale un dispositif pour alimenter un réseau de bord d'un véhicule en énergie électrique.

Des dispositifs pour alimenter un réseau de bord d'un véhicule en énergie électrique existant en milieu automobile comprennent des convertisseurs multi-phases entrelacés travaillant à fréquence fixe (par exemple 150kHz pour chaque phase). Par exemple, le document FR2970094 décrit un dispositif pour alimenter un réseau de bord en énergie électrique comprenant une pluralité de convertisseurs entrelacés et travaillant à fréquence fixe. La publication scientifique: "Réversible DC-to-DC converter for a dual voltage automotive system using zéro voltage switching technique (IEEE OPTIM 2008), divulgue elle un convertisseur entrelacé comportant des convertisseurs à fréquence variable.

Toutefois, pour un tel dispositif, des émissions conduites et rayonnées sont présentes sur un spectre étroit en radiofréquence et des filtres sont nécessaires pour respecter les normes EMI exigées pour les composants d'un véhicule.

En outre, les convertisseurs travaillant à une fréquence fixe ne gardent pas une stabilité de la régulation pour un rapport cyclique supérieur à 50% et ceci limite la puissance de sortie des convertisseurs et du dispositif.

De plus, ces convertisseurs entrelacés à fréquence fixe, par leur principe, nécessitent d'avoir un rapport cyclique de commande minimale (par exemple 1%) pour garder une stabilité de l'asservissement de la tension de sortie. Ce principe implique donc de consommer a minima un courant de charge de quelques ampères, ce qui implique un mauvais rendement.

De surcroît, des variations de la tension d'entrée du dispositif ne sont pas prises en compte par le régulateur du dispositif si bien que le fonctionnement du dispositif peut devenir instable.

Un but de la présente invention est de répondre aux inconvénients mentionnés ci-dessus et en particulier, de proposer un dispositif d'alimentation pour alimenter un réseau de bord d'un véhicule en énergie électrique qui peut fournir une puissance de sortie exigée d'une manière stable et qui ne nécessite pas de filtres pour éliminer des émissions étroites en radiofréquence afin de respecter les normes EMI exigées.

Pour cela un premier aspect de l'invention concerne un dispositif d'alimentation pour alimenter un réseau de bord d'un véhicule en énergie électrique comprenant :

au moins deux convertisseurs courant continu/courant continu entrelacés et réversibles entre un mode de fonctionnement abaisseur de tension et un mode de fonctionnement élévateur de tension, les convertisseurs étant destinés à être reliés à un stockeur d'énergie électrique et aptes à fournir un courant au réseau de bord ;

un interrupteur permettant à une source d'énergie électrique d'alimenter le réseau de bord lorsque l'interrupteur est dans un premier état, et permettant au stockeur d'énergie électrique d'alimenter le réseau de bord lorsque l'interrupteur est dans un deuxième état,

caractérisé en ce que les convertisseurs sont des convertisseurs à fréquence variable, et en ce que le dispositif d'alimentation comprend en outre un dispositif de synchronisation configuré pour synchroniser le fonctionnement des convertisseurs opérant à des fréquences variables et la génération du courant des convertisseurs.

Un tel dispositif synchronise le fonctionnement d'une pluralité de convertisseurs courant continu/courant continu travaillant à fréquence variable sur toute la plage de fréquence de fonctionnement des convertisseurs. Les convertisseurs peuvent fonctionner avec entrelacement quelle que soit la fréquence de travail des convertisseurs (par exemple, dans une plage de 4kHz à 40kHz) et gardent une stabilité de la régulation pour un rapport cyclique supérieur à 50%. En outre, des émissions conduites et rayonnées sont présentes sur un spectre large en radiofréquence et des filtres ne sont plus nécessaires pour respecter les normes EMI exigées.

Suivant l'invention, le dispositif de synchronisation comprend :
- des moyens de réception pour recevoir un signal de commutation généré par chacun des convertisseurs ;
- des moyens pour détecter un type de transition des signaux de commutation reçus ;
- des moyens pour générer un signal de synchronisation lorsqu'une transition est détectée ; et
- des moyens pour fournir le signal de synchronisation à l'un des convertisseurs, lesdits moyens étant configurés pour fournir le signal de synchronisation à un convertisseur différent et dans un ordre successif chaque fois qu'une transition est détectée.

Il comprend en outre des moyens de démarrage de synchronisation aptes à fournir un signal de synchronisation à un convertisseur prédéterminé.

Les moyens de démarrage de synchronisation incluent des moyens pour recevoir une valeur d'un courant traversant une inductance d'un convertisseur parmi les convertisseurs et des moyens pour générer un signal de démarrage de synchronisation lorsque la valeur dudit courant atteint une valeur prédéterminée.

De manière avantageuse, les moyens de réception incluent un circuit différentiateur pour traiter le signal de commutation reçu de chacun des convertisseurs.

De manière très avantageuse, les moyens pour détecter un type de transition des signaux de commutation incluent un circuit OU.

De manière très avantageuse, les moyens pour générer un signal de synchronisation lorsqu'une transition est détectée incluent une bascule D.

De manière très avantageuse, il inclut le stockeur d'énergie électrique.

Selon un deuxième aspect, la présente l'invention concerne un système comprenant le dispositif tel que défini ci-dessus, une source d'énergie électrique reliée au dispositif, et un réseau de bord relié au dispositif, le réseau de bord incluant un calculateur et au moins un appareil consommateur d'énergie électrique.

Selon un troisième aspect, la présente l'invention un véhicule automobile comprenant un dispositif tel que défini ci-dessus ou un système tel que défini ci-dessus.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la Figure 1 illustre un système selon la présente invention incluant un dispositif d'alimentation pour alimenter un réseau de bord d'un véhicule en énergie électrique selon la présente invention, une source d'énergie électrique et un réseau de bord RDB d'un véhicule ;
- la Figure 2 illustre un générateur du dispositif d'alimentation pour alimenter un réseau de bord d'un véhicule en énergie électrique selon la présente invention ;
- la Figure 3A illustre un dispositif de synchronisation du dispositif d'alimentation en énergie électrique selon la présente invention ;
- la Figure 3B illustre le fonctionnement d'un dispositif de démarrage de synchronisation du dispositif de synchronisation selon la présente invention ;
- la Figure 4 illustre un exemple de réalisation du dispositif de synchronisation du dispositif d'alimentation d'un réseau de bord en énergie électrique selon la présente invention ;
- la Figure 5 illustre l'évolution synchronisée du courant traversant l'inductance de chaque convertisseur fonctionnant en mode abaisseur de tension pour le système illustré dans la Figure 1 ;
- la Figure 6 illustre le courant efficace dans un stockeur d'énergie du système illustré dans la Figure 1 ;
- la Figure 7 illustre l'effet d'une panne de la synchronisation des convertisseurs courant continu/courant continu abaisseur de tension ;
- la Figure 8 illustre l'effet d'une panne de la synchronisation des convertisseurs durant 2ms ;
- La Figure 9 illustre l'évolution synchronisée du courant traversant l'inductance de chaque convertisseur fonctionnant en mode élévateur de tension ;
- la Figure 10 illustre les signaux de l'hystérésis, les valeurs des sorties Q et Qbarre, la valeur de l'inductance L1, la valeur de l'inductance L2 et les courants dans les inductances L1, L2 lorsque la valeur de l'inductance L1 est égale à la valeur de l'inductance L2 ;
- les Figures 11 et 12 illustrent qu'une déviation de composant inductif de +50% (self de commutation) n'entraîne pas l'arrêt du synchronisme ;

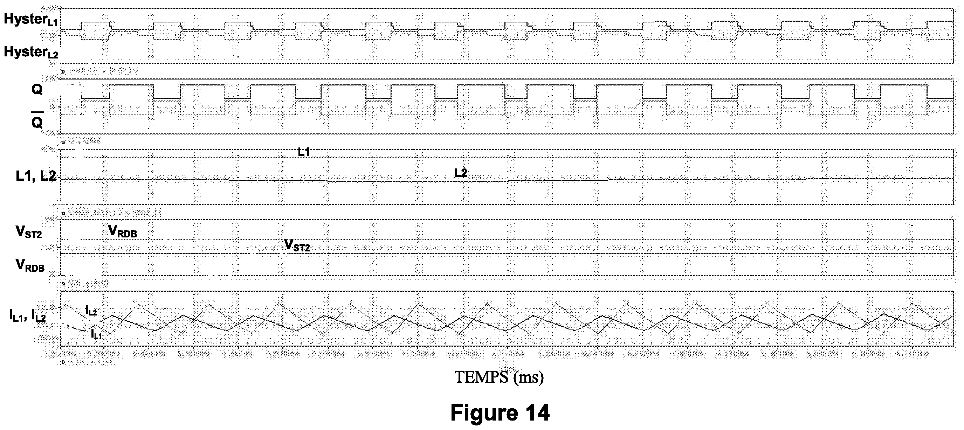

- Les Figures 13 et 14 illustrent qu'une déviation de composant inductif de - 50% n'entraîne pas l'arrêt du synchronisme ;
- la Figure 15 illustre les contrôleurs du générateur du dispositif d'alimentation en énergie électrique selon la présente invention ;
- la Figure 16 illustre un dispositif d'arrêt de génération de courant du générateur du dispositif d'alimentation en énergie électrique selon la présente invention ;
- la Figure 17a illustre le défaut des convertisseurs connus dans l'art antérieur qui ne s'arrêtent pas correctement lorsque la tension de régulation VREG OUT atteint une valeur proche de 0V ;
- la Figure 17b illustre l'amélioration apportée par la présente invention qui s'arrête correctement lorsque VREG OUT atteint une valeur proche de 0V (courant I_{L1}=0) ;
- la Figure 18 illustre un exemple de réalisation du dispositif d'arrêt de génération de courant ;
- la Figure 19 illustre en détails un premier régulateur pour le mode de fonctionnement abaisseur de tension du régulateur du dispositif d'alimentation en énergie électrique selon la présente invention ;
- la Figure 20 illustre un exemple de réalisation analogique du premier régulateur selon la présente invention ;
- la Figure 21 illustre le courant I_{L1} traversant l'inductance d'un convertisseur lors de fonctionnement du convertisseur en mode abaisseur de tension ;
- la Figure 22 illustre le cas où la valeur de la tension d'entrée du convertisseur V_{RDB} décroit ;
- la Figure 23 illustre en détails un deuxième régulateur pour le mode de fonctionnement élévateur de tension du régulateur du dispositif d'alimentation en énergie électrique selon la présente invention ;
- la Figure 24 illustre un exemple d'une fonction de transfert du deuxième correcteur Proportionnel-Intégral (PI) du deuxième régulateur ;
- la Figure 25 illustre un exemple de réalisation analogique du deuxième régulateur 25 selon la présente invention ;
- la Figure 26 illustre le courant I_{L1} traversant l'inductance d'un convertisseur élévateur de tension lorsque la tension d'entrée diminue ;
- la Figure 27 illustre le dispositif de sélection du régulateur du dispositif d'alimentation en énergie électrique selon la présente invention ;
- la Figure 28 illustre un exemple de réalisation du régulateur selon la présente invention ;
- la Figure 29 illustre un exemple de réalisation du dispositif de protection selon la présente invention ;
- la Figure 30 illustre l'évolution du courant traversant les inductances suite à un changement du mode de fonctionnement des convertisseurs ;
- la Figure 31 illustre des moyens pour fournir respectivement une tension V_{L1} et une tension V_{L2} représentative du courant I_{L1} et I_{L2} traversant les inductances ;
- la Figure 32 illustre le fonctionnement du système illustré dans la Figure 1 lors du démarrage des convertisseurs fonctionnant en mode abaisseur de tension ;
- la Figure 33 illustre le fonctionnement du système illustré dans la Figure 1 lors de l'arrêt des convertisseurs fonctionnant en mode abaisseur de tension ;
- la Figure 34 illustre le fonctionnement du système illustré dans la Figure 1 lors du démarrage des convertisseurs fonctionnant en mode élévateur de tension ;
- la Figure 35 illustre le fonctionnement du système illustré dans la Figure 1 lors de l'arrêt des convertisseurs fonctionnant en mode élévateur de tension ;
- la Figure 36 illustre l'effet du signal de pro-action en tension lors du fonctionnement du système illustré dans la Figure 1 lorsque les convertisseurs fonctionnent en mode abaisseur de tension ; et
- la Figure 37 illustre un exemple de réalisation du dispositif d'alimentation selon la présente invention.

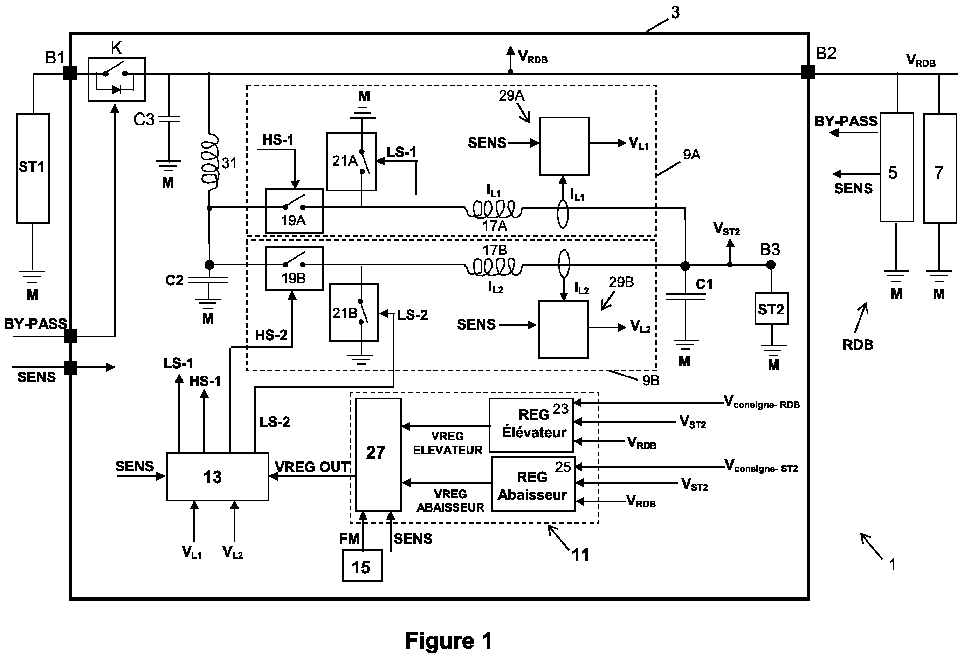

La Figure 1 illustre un système 1 selon la présente invention incluant un dispositif d'alimentation pour alimenter un réseau de bord en énergie électrique 3 selon la présente invention, une source d'énergie électrique ST1 et un réseau de bord RDB d'un véhicule. Le dispositif 3 est relié à la source d'énergie électrique ST1 par l'intermédiaire d'une première borne B1 et au réseau de bord RDB par l'intermédiaire d'une deuxième borne B2. La source d'énergie électrique est, par exemple, une batterie telle qu'une batterie électrochimique ou un supercondensateur. Le réseau de bord RDB comprend un calculateur 5 et au moins un appareil consommateur d'énergie électrique 7.

Le dispositif 3 comprend un stockeur d'énergie électrique ST2 et un interrupteur de dérivation K relié à la source d'énergie électrique ST1 par l'intermédiaire de la première borne B1 et relié au réseau de bord RDB par l'intermédiaire de la deuxième borne B2. Le calculateur 5 est en outre configuré pour fermer l'interrupteur de dérivation K du dispositif 3 afin d'alimenter le réseau de bord en énergie électrique et de recharger le stockeur d'énergie électrique ST2. Le calculateur 5 est configuré pour ouvrir l'interrupteur de dérivation K afin d'alimenter le réseau de bord RDB en énergie électrique par l'intermédiaire du stockeur d'énergie électrique ST2.

Une diode D1 est disposée en parallèle avec l'interrupteur de dérivation K. L'anode de la diode D1 est raccordée à la première borne B1 et la cathode de la diode D1 est raccordée à la deuxième borne B2.

Le calculateur 5 est configuré pour générer un signal BY-PASS et de le fournir à l'interrupteur de dérivation K afin de fermer ou d'ouvrir l'interrupteur de dérivation K. Le calculateur 5 est en outre configuré pour générer un signal binaire SENS et pour le fournir au dispositif 3.

Le dispositif 3 est apte à recevoir le signal SENS et à configurer le dispositif 3 en mode abaisseur de tension ou en mode élévateur de tension selon la valeur du signal SENS. Lorsque l'interrupteur de dérivation K est fermé, le calculateur 5 fournit un signal SENS ayant une valeur (par exemple, 0V) indiquant qu'une configuration en mode abaisseur de tension est à mettre en œuvre, et lorsque l'interrupteur de dérivation K est ouvert, le calculateur 5 fournit un signal SENS ayant une valeur (par exemple, 5V) indiquant qu'une configuration en mode élévateur de tension est à mettre en œuvre.

Le dispositif 3 comprend en outre deux convertisseurs 9A, 9B entrelacés. Chaque convertisseur 9A, 9B est réversible entre un mode de fonctionnement abaisseur de tension et un mode de fonctionnement élévateur de tension, et travaille à fréquence variable. Chaque convertisseur est un convertisseur opérant à fréquence variable et chaque convertisseur est régulé en courant et en tension. Les deux convertisseurs 9A, 9B sont montés en parallèles. Ils sont synchronisés fonctionnant en fréquence variable par auto-oscillation.

Le dispositif 3 comprend en outre un régulateur 11, un générateur 13 et un modulateur 15. Le régulateur 11 délivre en sortie une tension de régulation VREG OUT servant de tension de référence pour les tensions V_{L1} et V_{L2} image des courants I_{L1} et I_{L2} des convertisseurs 9A, 9B. La régulation en courant I_{L1} et I_{L2} est réalisée par le générateur 13.

Le dispositif 3 illustré sur la Figure 1 inclut le stockeur d'énergie électrique ST2. Le stockeur d'énergie électrique ST2 est relié électriquement d'un côté à la masse M et de l'autre côté à une troisième borne B3. Alternativement, le dispositif 3 ne comprend pas le stockeur d'énergie électrique ST2 mais il est relié à un stockeur d'énergie électrique externe par l'intermédiaire d'une borne (non-illustrée) du dispositif 3.

Le convertisseur 9A comprend une inductance 17A, et un premier commutateur 19A et un deuxième commutateur 21A, l'ensemble des commutateurs 19A, 21A formant un demi pont. Le convertisseur 9B comprend une inductance 17B, et un premier commutateur 19B et un deuxième commutateur 21B, l'ensemble des commutateurs 19B, 21B formant un demi pont. Le premier commutateur 19A et le deuxième commutateur 21A sont aptes à recevoir respectivement un signal de pilotage HS-1 et LS-1 du générateur 13 pour piloter les commutateurs 19A et 21A afin de générer un courant traversant l'inductance 17A. Le premier commutateur 19B et le deuxième commutateur 21B sont aptes à recevoir respectivement un signal de pilotage HS-2 et LS-2 du générateur 13 pour piloter les commutateurs 19B et 21B afin de générer un courant traversant l'inductance 17B.

Chaque commutateur 19A, 19B est relié électriquement d'un côté à la première borne B1 par l'intermédiaire de l'interrupteur K et de l'autre côté en série avec l'inductance 17A, 17B qui est reliée de l'autre côté à la troisième borne B3 et le stockeur d'énergie électrique ST2. Chaque commutateur 21A, 21B est reliée électriquement d'un côté entre le commutateur 19A, 19B et l'inductance 17A, 17B et de l'autre côté à la masse M.

Le générateur 13 est apte à recevoir le signal SENS et à adopter la configuration d'un convertisseur abaisseur de tension lorsque la valeur du signal SENS est égale à 0V (un niveau logique 0). Dans ce cas, l'interrupteur de dérivation K est fermé et la troisième borne B3 est une borne de sortie de tension du convertisseur et la première borne B1 est une borne d'entrée de tension au convertisseur.

Le générateur 13 est en outre apte à adopter la configuration d'un convertisseur élévateur de tension lorsque la valeur du signal SENS est égale à 5V (un niveau logique 1). Dans ce cas, l'interrupteur de dérivation K est ouvert et la troisième borne B3 est une borne d'entrée de tension au convertisseur et la deuxième borne B2 est une borne de sortie de tension du convertisseur.

Le régulateur 11 fournit une tension de régulation VREG OUT du courant traversant les inductances 17A, 17B au générateur 13. Le régulateur 11 comprend un premier régulateur 23 pour le mode de fonctionnement mode abaisseur de tension et un deuxième régulateur 25 pour le mode élévateur de tension. Le régulateur 11 comprend en outre un dispositif de sélection 27 apte à sélectionner une tension de régulation VREG ELEVATEUR fournie par le premier régulateur 23 ou une tension de régulation VREG ABAISSEUR fournie par le deuxième régulateur 25 selon la valeur du signal SENS. Le dispositif de sélection 27 est apte à fournir la tension de régulation VREG ABAISSEUR ou la tension de régulation VREG ELEVATEUR (la tension de régulation VREG OUT) au générateur 13.

Le modulateur 15 est configuré pour fournir un signal de tension alternatif à une fréquence prédéterminée au régulateur 11.

Chaque convertisseur 9A, 9B inclut des moyens 29A, 29B pour fournir respectivement une tension V_{L1} et une tension V_{L2} (une image du courant I_{L1} et I_{L2}) représentative du courant I_{L1} et I_{L2} traversant respectivement l'inductance 17A et l'inductance 17B au générateur 13. Les moyens 29A, 29B comprennent un convertisseur linéaire courant/tension de gain R pour convertir un échantillonnage du courant I_{L1},I_{L2} traversant l'inductance 17A, 17B en une tension V_{L1}, V_{L2}.

Le dispositif 3 comprend en outre des condensateurs de filtrage C1, C2 et C3 ainsi qu'une inductance 31 reliés aux convertisseurs 9A, 9B. Les convertisseurs 9A, 9B sont filtrés d'un côté par les condensateurs de filtrage C2, C3 et l'inductance 31 et de l'autre côté par le condensateur de filtrage C1.

Comme illustré sur la Figure 1, les convertisseurs 9A, 9B sont reliés d'un côté à la source d'énergie électrique ST1 par l'intermédiaire de l'interrupteur K et de la première borne B1, et de l'autre côté à la deuxième stockeur d'énergie électrique ST2 par l'intermédiaire de la troisième borne B3.

Le dispositif 3 permet de fournir de l'énergie au réseau de bord et de recharger le stockeur d'énergie ST2 simultanément (les convertisseurs fonctionnant en mode abaisseur de tension). Le dispositif 3 permet en outre de faire de la récupération d'énergie sur le stockeur d'énergie ST2 et de la restituer au réseau de bord (les convertisseurs fonctionnant en mode élévateur de tension).

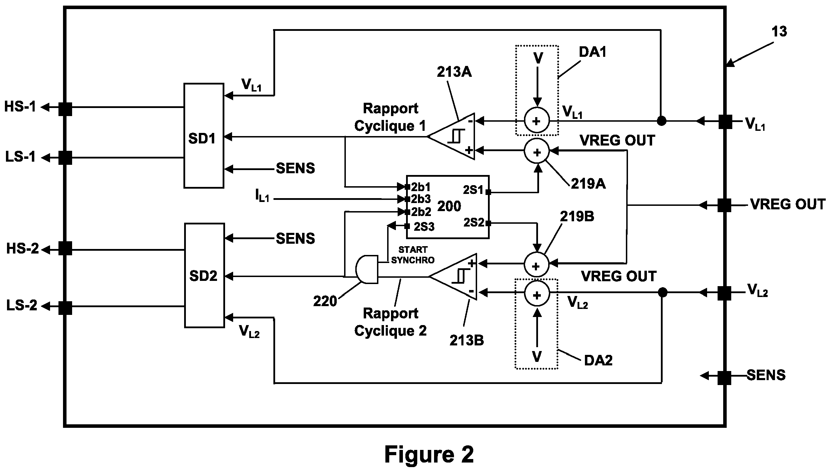

Le générateur 13 selon la présente invention est illustré sur la Figure 2. Le générateur 13 réalise d'une part la régulation de courant I_{L1} et I_{L2} par la génération des rapports cycliques (rapport cyclique 1 et rapport cyclique 2) en synchronisme, et d'autre part la génération des signaux de pilotage LS-1, LS-2, HS-1, HS-2 des commutateurs 19A, 21A, 19B, 21B par des contrôleurs SD1, SD2.

Le générateur 13 est apte à recevoir la tension de régulation VREG OUT issu du régulateur 11, le signal SENS fourni par le calculateur 5, et la tension V_{L1} et la tension V_{L2} représentative du courant I_{L1} et I_{L2} traversant respectivement l'inductance 17A et l'inductance 17B des moyens 29A, 29B. Le générateur 13 est apte à générer les signaux de pilotage HS-1, LS-1 et HS-2, LS-2.

Le générateur 13 comprend un dispositif de synchronisation 200 et un premier générateur 213A et un deuxième générateur 213B, par exemple, un comparateur à hystérésis, pour produire un signal de commutation pour piloter les commutateurs des convertisseurs 9A, 9B afin de générer un courant traversant les inductances 17A, 17B.

Le générateur 13 comprend en outre un premier additionneur 219A, un deuxième additionneur 219B, un premier contrôleur SD1, un deuxième contrôleur SD2, un premier dispositif d'arrêt de génération de courant DA1, un deuxième dispositif d'arrêt de génération de courant DA2 et une porte ET (ou porte de blocage) 220.

La porte ET 220 est apte à recevoir un signal de démarrage de synchronisation START SYNCHRO du dispositif de synchronisation 200 et le rapport cyclique (rapport cyclique 2) généré par le deuxième comparateur à hystérésis 213B. Le signal en sortie de la porte ET 220 est fourni au deuxième contrôleur SD2.

Le comparateur à hystérésis 213A est relié aux commutateurs 19A, 21A du convertisseur 9A par l'intermédiaire du contrôleur SD1 afin de transmettre un signal de commutation permettant la fermeture et l'ouverture du commutateur 19A ou 21A pour générer un courant dans l'inductance 17A. Le comparateur à hystérésis 213B est relié aux commutateurs 19B, 21B du convertisseur 9B par l'intermédiaire du contrôleur SD2 afin de transmettre un signal de commutation permettant la fermeture et l'ouverture du commutateur 19B ou 21B pour générer un courant dans l'inductance 17B.

Le comparateur à hystérésis 213A reçoit à son entrée inverseuse la tension V_{L1} représentative du courant I_{L1} traversant l'inductance 17A et à son entrée non-inverseuse la tension de régulation VREG OUT fournie par le régulateur 11. Le comparateur à hystérésis 213B reçoit à son entrée inverseuse la tension V_{L2} représentative du courant I_{L2} traversant l'inductance 17B et à son entrée non-inverseuse la tension de régulation VREG OUT fournie par le régulateur 11.

Chaque additionneur 219A, 219B est apte à additionner un signal de synchronisation fourni par le dispositif de synchronisation 200 à la valeur de la tension de régulation VREG OUT fournie par le régulateur 15. L'additionneur 219A est apte à fournir le résultat à l'entrée non-inverseuse du comparateur à hystérésis 213A et l'additionneur 219B est apte à fournir le résultat à l'entrée non-inverseuse du comparateur à hystérésis 213B.

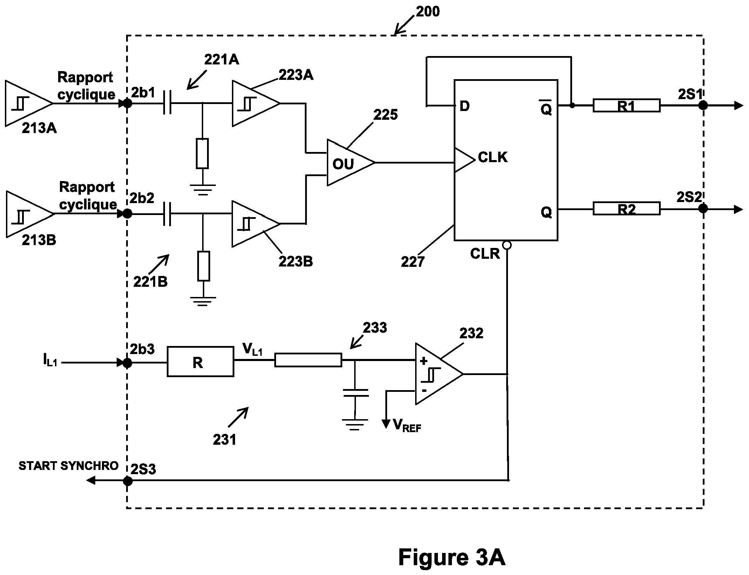

Le dispositif de synchronisation 200 selon la présente invention est illustré en détails sur la Figure 3A.

Le dispositif de synchronisation 200 est apte à recevoir le signal de commutation issu du comparateur à hystérésis 213A à une première borne d'entrée 2b1 et à recevoir le signal de commutation issu du comparateur à hystérésis 213B à une deuxième borne d'entrée 2b2.

Le dispositif de synchronisation 200 comprend des moyens de réception pour recevoir le signal de commutation généré par chacun des convertisseurs. Les moyens de réception incluent un circuit différentiateur 221A et un circuit de mise en forme 223A pour recevoir et traiter le signal de commutation fourni par le comparateur à hystérésis 213A, et un circuit différentiateur 221B et un circuit de mise en forme 223B pour recevoir et traiter le signal de commutation fourni par le comparateur à hystérésis 213B.

Le dispositif de synchronisation 200 comprend en outre des moyens pour détecter un type de transition des signaux de commutation reçus. Les moyens pour détecter un type de transition incluent un circuit OU 225.

Le circuit différentiateur 221A est relié d'un côté à la première borne 2b1 et de l'autre côté au circuit de mise en forme 223A. Le circuit de mise en forme 223A est aussi relié à une entrée du circuit OU. Le circuit différentiateur 221B est relié d'un côté à la première borne 2b2 et de l'autre côté au circuit de mise en forme 223B. Le circuit de mise en forme 223B est relié à l'autre entrée du circuit OU.

Le dispositif de synchronisation 200 comprend en outre des moyens pour générer un signal de synchronisation lorsqu'une transition est détectée et des moyens pour fournir le signal de synchronisation à l'un des additionneurs 219A, 219B.

Les moyens pour générer un signal de synchronisation lorsqu'une transition est détectée incluent une bascule D 227.

La sortie du circuit OU est reliée à une entrée horloge CLK de la bascule D. Une sortie Q de la bascule D est reliée à une résistance R1 (par exemple, de 200kΩ) et la sortie complémentée de Q (Qbarre) de la bascule D est relié à une résistance R2 (par exemple, de 200kΩ). L'autre entrée D de la bascule D est reliée à la sortie complémentée de Q (Qbarre) et à la résistance R1.

La résistance R1 est aussi reliée à une première borne de sortie 2S1 et la résistance R2 est reliée à une deuxième borne de sortie 2S2 du dispositif 200.

La bascule D est apte à générer alternativement un signal de synchronisation à la sortie Q et un signal de synchronisation à la sortie complémentée de Q (Qbarre) chaque fois que l'entrée horloge CLK reçoit un signal actif du circuit OU.

Les moyens pour fournir le signal de synchronisation à l'un des additionneurs 219A, 219B comprend la bascule D, la résistance R1 reliée à la première borne de sortie S1 et la résistance R2 reliée à la deuxième borne de sortie S2.

Le dispositif de synchronisation 3 reçoit en entrée les signaux de commutations sorties de chaque comparateur à hystérésis 213A, 213B. Les signaux de commutations sont des signaux modulés en largeur d'impulsions (PWM) et l'intensité du courant générée dans les inductances 17A, 17B est déterminée par le rapport cyclique de ces signaux.

Chaque transition du signal de commutation en sortie du comparateur 213A est traitée par le circuit différenciateur 221A et le circuit de mise en forme 223A et fournie à l'entrée du circuit OU. Chaque transition du signal de commutation en sortie du comparateur 213B est traitée par le circuit différenciateur 221B et le circuit de mise en forme 223B et fournie à l'autre entrée du circuit OU.

Seules les transitions positives sont prises en compte par le circuit OU 225 et sont fournies à l'entrée horloge CLK de la bascule D. La bascule D alterne les états de sortie Q et Qbarre à chaque transition positive sur son entrée horloge CLK reçue du circuit OU. Un signal de synchronisation (par exemple, un signal de +5V) est produit alternativement à ces sorties Q et Qbarre. Un signal de synchronisation est ainsi fourni à un additionneur 219A, 219B différent (par l'intermédiaire des résistances R1, R2) et dans un ordre successif (par exemple, 219A, 219B, 219A, 219B...) chaque fois qu'une transition positive est détectée par le circuit OU (dans le cas où le dispositif 3 comprendrait trois convertisseurs 9A, 9B et 9C, l'ordre sera par exemple, 219A, 219B, 219C, 219A, 219B, 219C...).

Le signal de synchronisation est fourni à l'additionneur 219A ou l'additionneur 219B à travers la résistance R1 ou R2. L'additionneur 219A ou 219B additionne la valeur de la tension de régulation VREG OUT au signal de synchronisation (par exemple, une tension de +290mV). Le résultat est fourni à l'entrée non-inverseuse du comparateur à hystérésis pour modifier l'amplitude de l'hystérésis du comparateur.

Une tension de 0V est fournie à l'autre additionneur et le comparateur à hystérésis relié à l'autre additionneur ne reçoit que la valeur de la tension de régulation VREG OUT à son entrée non-inverseuse.

La fourniture alternative du signal de synchronisation à l'additionneur 219A et l'additionneur 219B pour modifier l'amplitude de l'hystérésis du comparateur lorsqu'une transition positive est détectée par le circuit OU permet de synchroniser le fonctionnement des convertisseurs 9A et 9B opérant à des fréquences variable pour synchroniser la génération du courant dans les inductances 17A, 17B par les convertisseurs 9A, 9B.

Le dispositif de synchronisation 200 comprend en outre un dispositif de démarrage de synchronisation 231 pour assurer un synchronisme correct des signaux rapport cyclique 1 et rapport cyclique 2. Le dispositif de synchronisation 200 est apte à fournir un signal de synchronisation à un convertisseur prédéterminé.

Le dispositif de démarrage de synchronisation 231 comprend un comparateur 232, un convertisseur linéaire courant / tension de gain R et un circuit de mise en forme 233 (par exemple, un circuit RC) apte à empêcher un démarrage de synchronisation simultané des deux convertisseurs 9A, 9B relié d'un côté à l'entrée non-inverseuse du comparateur 232 et de l'autre coté à une borne d'entrée 2b3 par l'intermédiaire du convertisseur linéaire courant / tension de gain R. Le dispositif 231 comprend en outre une source de tension de référence V_{REF} (par exemple, une tension fixe de 2,5V) reliée à l'entrée inverseuse du comparateur 232. La sortie du comparateur 232 est reliée à une entrée de réinitialisation CLR de la bascule D.

Le dispositif 231 assure le bon démarrage de la synchronisation. Il est configuré pour générer un signal de démarrage de synchronisation START SYNCHRO. La borne d'entrée 2b3 reçoit la valeur du courant I_{L1} (ou I_{L2}) (une image du courant I_{L1} (ou I_{L2})) traversant l'inductance 17A (ou l'inductance 17B) lors d'une mise en alimentation d'un convertisseur 9A ou 9B ou du dispositif 3.

L'image du courant passant dans l'inductance 17A (V_{L1}) est filtrée par le circuit RC puis comparée, par le comparateur 232, à la valeur de la tension de référence V_{REF}. Le comparateur 232 génère en sortie le signal de démarrage de synchronisation START SYNCHRO. Ce signal est envoyé à l'entrée de réinitialisation CLR de la bascule 227 pour initialiser les sorties de la bascule 227 et à la porte ET 220 par l'intermédiaire d'une borne de sortie 2S3.

Au démarrage du dispositif 3, seulement le convertisseur 9A génère un courant. Lorsque le courant I_{L1} est inférieur à une valeur prédéterminée (par exemple, une valeur faible <3 Amps), le signal START SYNCHRO en sortie du comparateur 232 reste à 0V et impose une réinitialisation à la bascule D si bien qu'un signal de synchronisation (par exemple, un signal de +5V) est produit à la sortie Q et un signal de 0V est produit à la sortie Qbarre. Un signal de synchronisation est ainsi fourni à l'additionneur 219A par l'intermédiaire de la première borne de sortie 2S1. La bascule D est ainsi apte à toujours fournir un signal de synchronisation à une borne de sortie prédéterminée (2S1) lorsqu'elle reçoit un signal START SYNCHRO ayant une valeur de 0V. Ainsi la sortie 2S1 du dispositif de synchronisation 200 s'initialise à une tension positive (par exemple, + 290mV) et la sortie 2S2 s'initialise à une tension nulle.

En outre, la porte ET 220 ne fournit pas le signal rapport cyclique 2 au deuxième contrôleur SD2 lorsqu'elle reçoit un signal START SYNCHRO ayant une valeur de 0V.

Lorsque le courant I_{L1} dépasse cette valeur prédéterminée (3 Amps), le signal de démarrage de synchronisation START SYNCHRO passe, par exemple, à une valeur de 5V si bien qu'une réinitialisation n'est plus imposée à la bascule D et la porte ET 220 fournit le signal rapport cyclique 2 au deuxième contrôleur SD2. La bascule D devient pleinement opérationnelle et les signaux fournis aux bornes de sorties 2S1 et 2S2 sont en alternance (comme indiqué ci-dessus) et réalisent le décalage en tension par l'intermédiaire des additionneurs 219A, 219B. Par exemple, le dispositif 200 fournira un signal de synchronisation à la sortie 2S2 lorsqu'une transition positive est détectée par le circuit OU (et ensuite à la sortie 2S1, 2S2, 2S1, 2S2...). Un synchronisme correct des signaux rapport cyclique 1 et rapport cyclique 2 est ainsi réalisé.

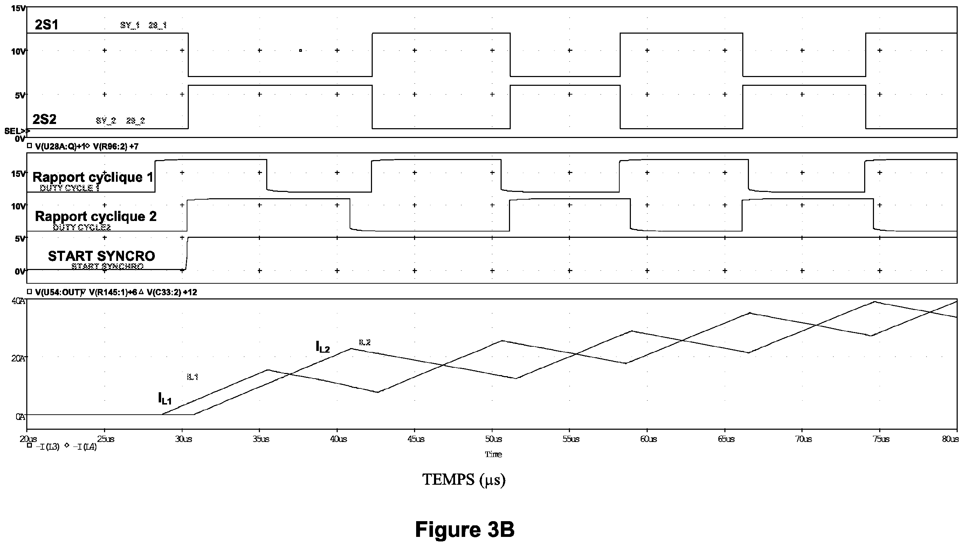

La Figure 3B illustre le fonctionnement du dispositif de démarrage de synchronisation 231.

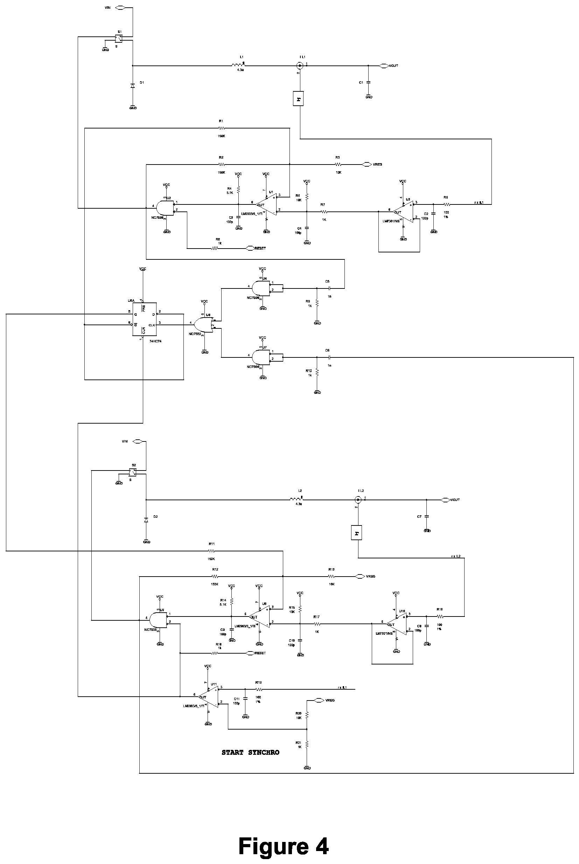

La Figure 4 illustre un exemple de réalisation du dispositif de synchronisation 200.

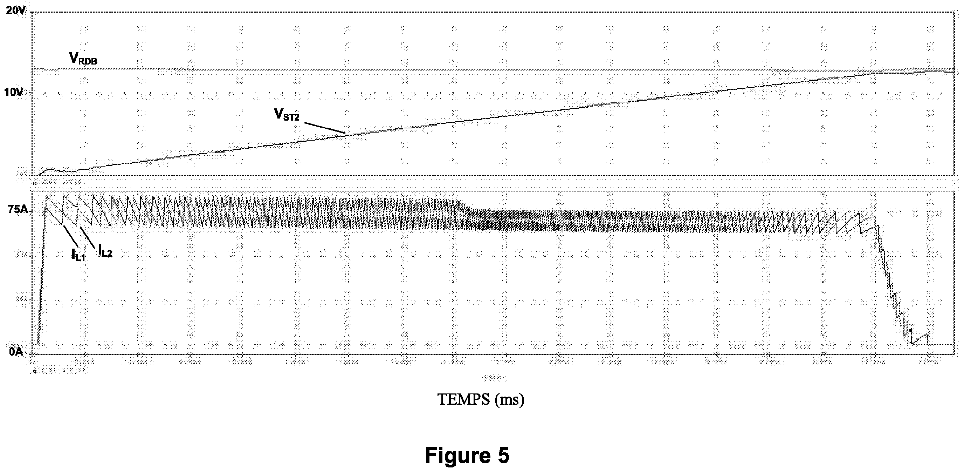

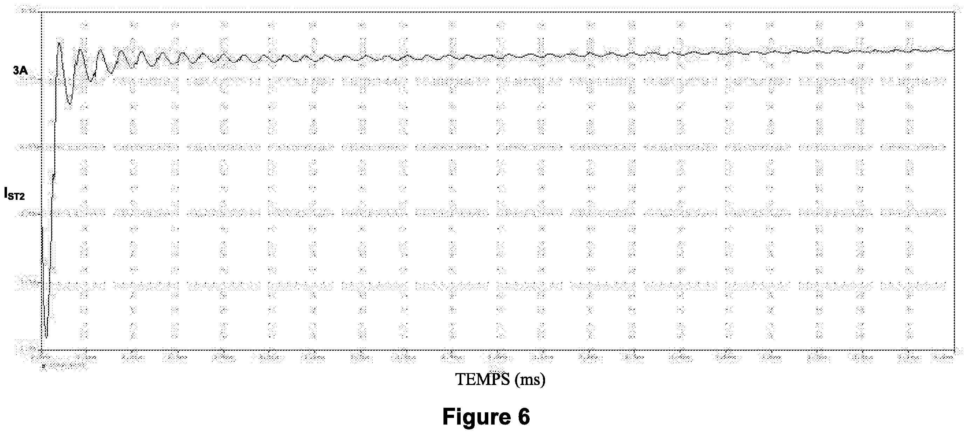

La Figure 5 illustre la valeur du courant I_{L1} traversant l'inductance 17A et la valeur du courant I_{L2} traversant l'inductance 17B lorsque les convertisseurs 9A et 9B fonctionnent en mode abaisseur de tension. La Figure 5 montre que la génération du courant I_{L1} et I_{L2} est synchronisée et que le système 1 fournit une tension de sortie V_{ST2} stable et charge le stockeur d'énergie ST2 jusqu'à une valeur demandée de 12V. La Figure 6 illustre un courant efficace de 3A dans le stockeur d'énergie ST2.

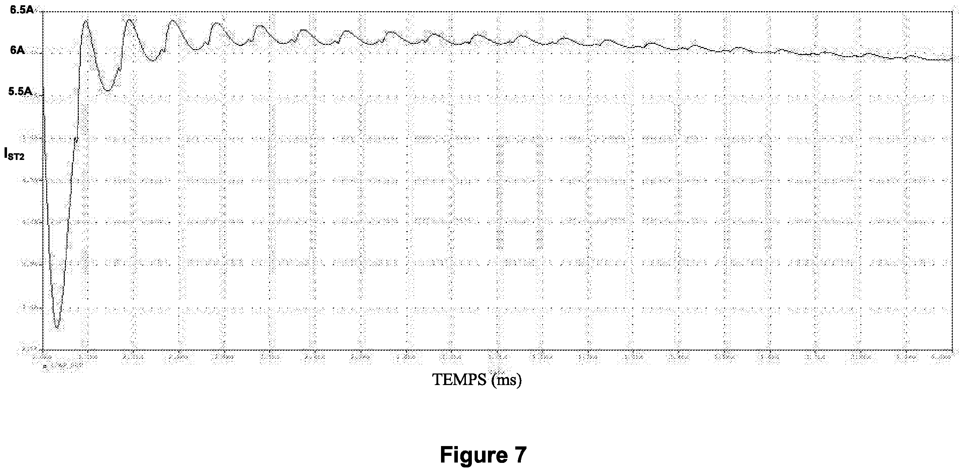

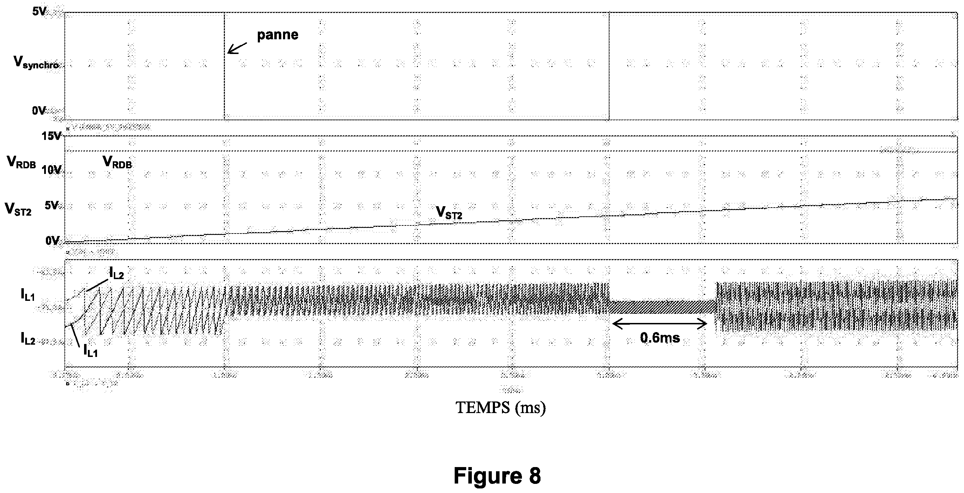

La Figure 7 illustre l'effet d'une panne de la synchronisation des convertisseurs courant continu/courant continu abaisseur de tension. Il n'y a pas d'arrêt total de tous les convertisseurs lors de la panne et le courant efficace dans le stockeur d'énergie ST2 est doublée (6A). La Figure 8 illustre une panne de synchronisation durant 2ms. Les deux convertisseurs abaisseurs de tension fonctionnent durant la panne sans entrelacement. Après la disparition de la panne, les convertisseurs se synchronisent après un délai (de 0.6ms dans la Figure 8).

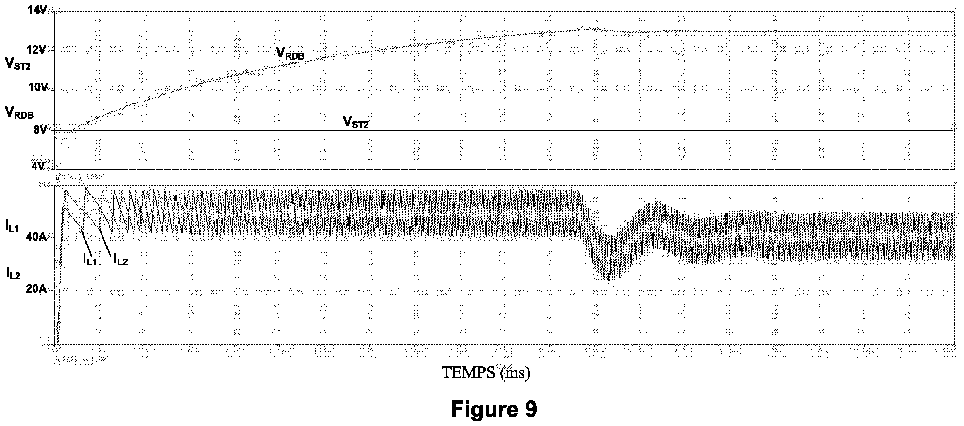

La Figure 9 illustre la valeur du courant I_{L1} traversant l'inductance 17A et la valeur du courant I_{L2} traversant l'inductance 17B lorsque les convertisseurs 9A et 9B fonctionnent en mode élévateur de tension. La Figure 9 montre que la génération du courant I_{L1} et I_{L2} est synchronisée et que le système 1 fournit une tension de sortie V_{RDB} stable jusqu'à la valeur demandée de 13V.

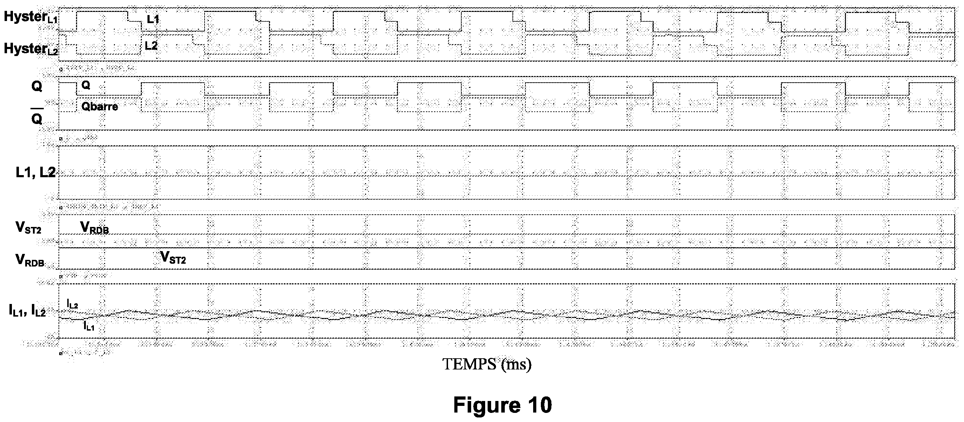

La Figure 10 illustre les signaux de l'hystérésis, les valeurs des sorties Q et Qbarre, la valeur de l'inductance L1 du 17A, la valeur de l'inductance L2 du 17B et les courants dans les inductances L1 (17A), L2 (17B) lorsque la valeur de l'inductance L1 (17A) est égale à la valeur de l'inductance L2 (17B).

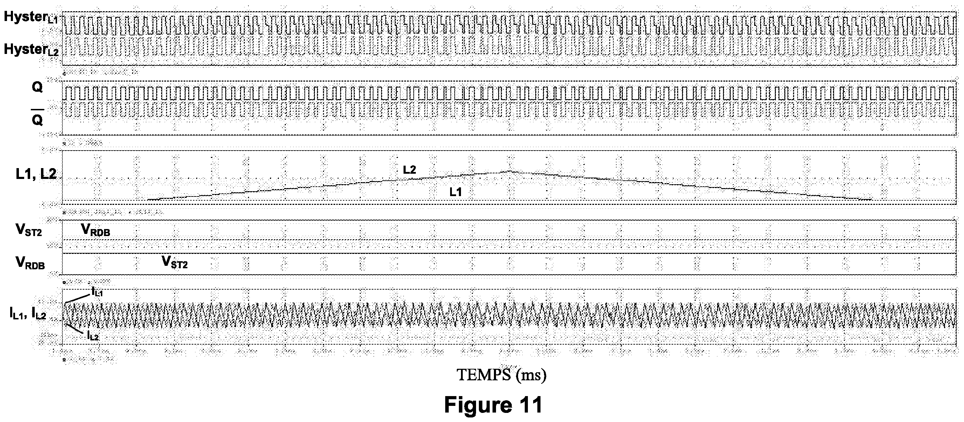

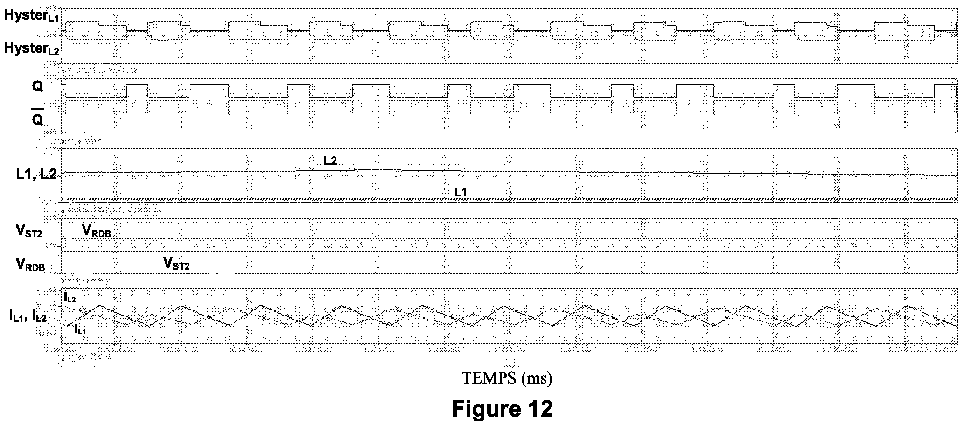

Les Figures 11 et 12 illustrent les signaux de l'hystérésis, les valeurs des sorties Q et Qbarre, la valeur de l'inductance L1 (17A), la valeur de l'inductance L2 (17B) et les courants dans les inductances L1 (17A), L2 (17B) lors d'une déviation de l'inductance L1 (17A) vers l'inductance L2 (17B) (L2=150%L1). Ces Figures montrent qu'une déviation de composant inductif de +50% (self de commutation) n'entraîne pas l'arrêt du synchronisme.

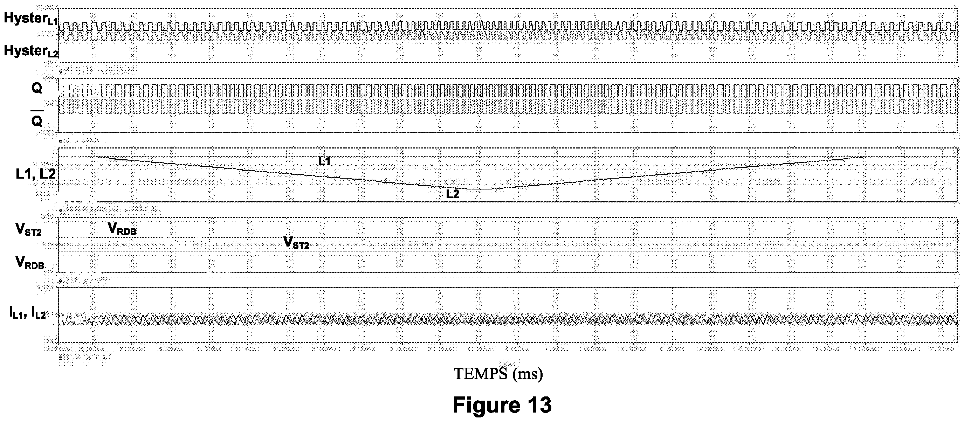

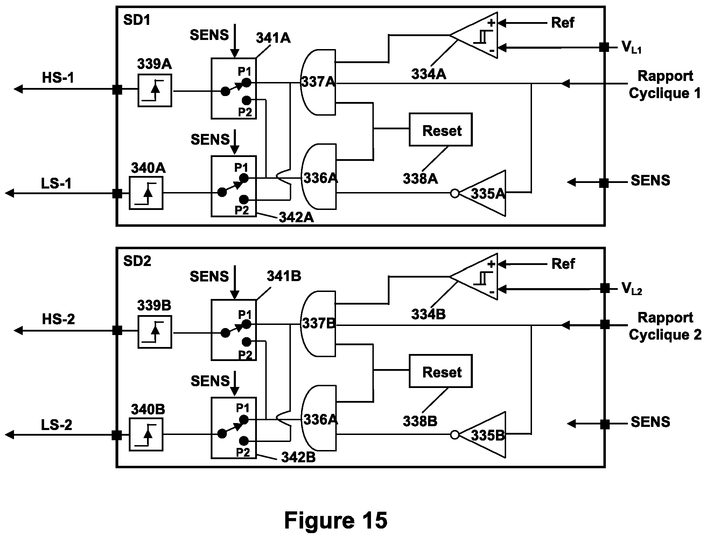

Les Figures 13 et 15 illustrent les signaux de l'hystérésis, les valeurs des sorties Q et Qbarre, la valeur de l'inductance L1 (17A), la valeur de l'inductance L2 (17B) et les courants dans les inductances L1, L2 lors d'une déviation de l'inductance L1 vers l'inductance L2 (L2=-150%L1). Ces Figures montrent qu'une déviation de composant inductif de -50% n'entraîne pas l'arrêt du synchronisme.

La présente invention fournit ainsi un dispositif de synchronisation 200 permettant de synchroniser le fonctionnement d'une pluralité de convertisseurs courant continu/courant continu à fréquence variable sur toute la plage de fréquence de fonctionnement des convertisseurs. Des convertisseurs abaisseurs de tension ou élévateurs de tension peuvent fonctionner avec entrelacement quelle que soit la fréquence de travail des convertisseurs (par exemple, dans une plage de 4kHz a 40kHz). De plus, une panne de fonctionnement de la synchronisation n'entraîne pas l'arrêt forcé de tous les convertisseurs. Ils travaillent alors sur leur propre fréquence respective. En outre, une dérive forte de composant inductif (+/-50%) (self de commutation) n'entraîne pas l'arrêt du synchronisme. Ainsi, il n'est pas utile de réaliser des calculs numériques pour la synchronisation en corrigeant les dérives de composants des convertisseurs. De surcroît, la présente invention permet de réduire le courant d'ondulation dans la capacité de filtrage.

Les contrôleurs SD1 et SD2 selon la présente invention sont illustrés en détails sur la Figure 15.

Le contrôleur SD1 est apte à recevoir le signal de commutation (Rapport cyclique 1) en sortie du comparateur 213A, le signal SENS fourni par le calculateur 5, et la tension V_{L1} représentative du courant I_{L1} traversant l'inductance 17A des moyens 29A. Le contrôleur SD1 est apte à générer les signaux de pilotage HS-1 et LS-1.

Le contrôleur SD2 est apte à recevoir le signal de commutation (Rapport cyclique 2) en sortie du comparateur 213B, le signal SENS fourni par le calculateur 5, et la tension V_{L2} représentative du courant I_{L2} traversant l'inductance 17B des moyens 29B. Le contrôleur SD2 est apte à générer les signaux de pilotage HS-2 et LS-2.

Chaque contrôleur SD1, SD2 fonctionne comme une diode pilotée et permet un rapport cyclique élevé (> 50%) sans instabilité.

Chaque contrôleur SD1, SD2 inclut un comparateur 334, un inverseur 335, une porte logique ET ayant deux entrées 336, une porte logique ET ayant trois entrées 337, des moyens 338 pour fournir un signal de réinitialisation (RESET), des retardateurs de signaux 339, 340, un premier commutateur 341 et deuxième commutateur 342.

Le premier commutateur 341 et le deuxième commutateur 342 sont aptes à recevoir le signal SENS et aptes à transférer un signal de commutation au retardateur de signaux 339 et au retardateur de signaux 340 selon la valeur du signal SENS. Par exemple, lorsque la valeur du signal SENS est égale à 0V (un niveau logique 0 et mode abaisseur de tension), un signal de commutation issu de 336 est transféré au retardateur de signaux 339 par l'intermédiaire de la borne P2, et acheminé au commutateur 19 du convertisseur. Un signal de commutation issu de 337 est transféré au retardateur de signaux 340 par l'intermédiaire de P2 et acheminé au commutateur 21. Lorsque la valeur du signal SENS est égale à 5V (un niveau logique 1 et mode élévateur de tension), un signal de commutation issu de 336 est transféré au retardateur de signaux 340 par l'intermédiaire de la borne P1, et acheminé au commutateur 21 du convertisseur. Un signal de commutation issu de 337 est transféré au retardateur de signaux 339 par l'intermédiaire de P1 et acheminé au commutateur 19.

Les moyens 338 pour fournir un signal de réinitialisation imposent un état 0 sur les sorties LS1 et HS1 des retardateurs de signaux 339, 340 lorsque la sortie des moyens 338 est à 0 pendant la phase d'initialisation des alimentations internes (+5V par exemple). Dans ce cas précis, les commutateurs 19 et 21 sont ouverts.

Le comparateur 334 compare la valeur V_{L1} à une tension de référence REF (par exemple, 0.5V correspondant à I_{L1}(ou I_{L2})=2A). Si ce courant est inférieur à 2 Amps, alors le commutateur 21 s'ouvre et ne laisse pas passer un courant IL négatif lorsque SENS = 0, alors le commutateur 19 s'ouvre et ne laisse pas passer le courant IL négatif lorsque SENS = 5V. Les retardateurs de signaux 339, 340 interdisent la conduction simultanée des deux commutateurs 19 et 21.

Chaque contrôleur SD1, SD2 offre une impédance à l'état passant très inférieure à celle d'une diode passive et donc améliore le rendement du convertisseur et limite son échauffement thermique. En outre, il permet de garder la stabilité de la régulation pour un rapport cyclique supérieur à 50%.

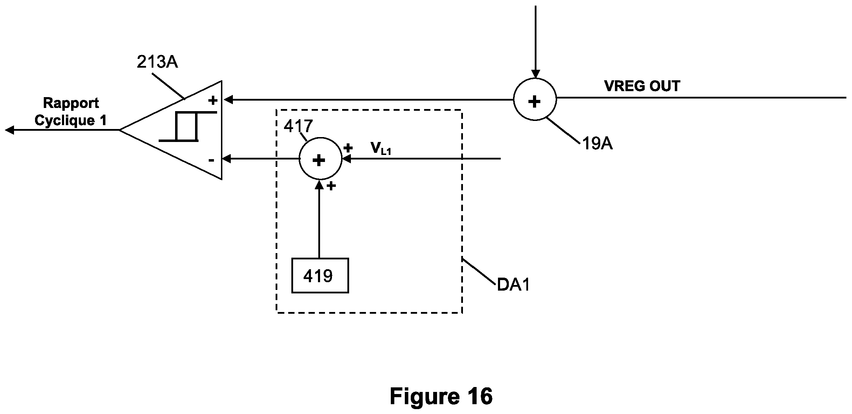

Le premier dispositif d'arrêt de génération de courant DA1 du générateur 13, selon un autre aspect de la présente invention, est illustré en détails sur la Figure 16. Le deuxième dispositif d'arrêt de génération de courant DA2 est identique au premier dispositif d'arrêt de génération de courant DA1.

Le dispositif d'arrêt de génération de courant DA1 est apte à modifier la valeur de la tension appliquée à l'entrée inverseuse du comparateur à hystérésis 213A afin d'arrêter la commutation du commutateur et la génération du courant IL traversant l'inductance.

Le dispositif d'arrêt de génération de courant DA1 est disposé entre l'entrée inverseuse du comparateur 213A et les moyens 29 fournissant une tension VL représentative du courant traversant l'inductance.

Le dispositif d'arrêt de génération de courant DA1 inclut un additionneur 417 et des moyens 419 fournissant une fraction d'une tension d'alimentation générale (par exemple Vcc = +5V) du dispositif 3. Les moyens 419 pour fournir une fraction de la tension d'alimentation générale comprennent, par exemple, un pont diviseur de deux résistances.

L'additionneur 417 est relié à l'entrée inverseuse du comparateur et est apte à additionner une tension de décalage, qui est la fraction (par exemple 0.5V) de la tension d'alimention générale, à la tension V_{L1} représentative du courant traversant l'inductance.

L'additionneur 417 fournit le résultat à l'entrée inverseuse du comparateur. La tension résultante obtenue sur l'entrée inverseuse du comparateur est égale à (R X I_{L1}) + 0.5 V. Lorsque la tension VREG OUT est inférieure à cette tension résultante (R X I_{L1}) + 0.5 V, le comparateur passe à l'état bas (0 volt), générant l'arrêt du commutateur du convertisseur.

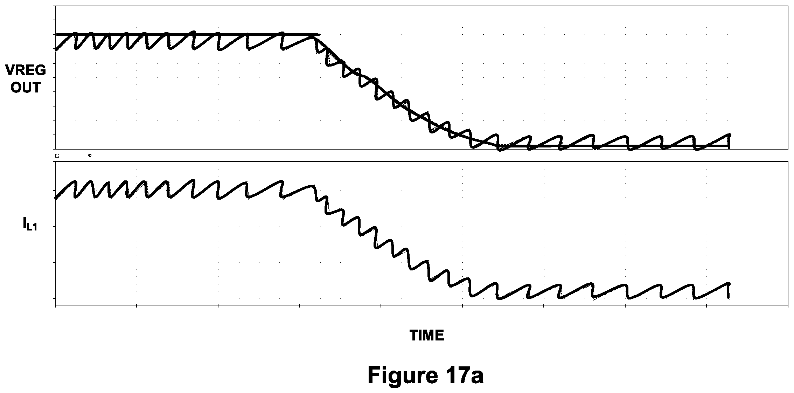

La Figure 17a illustre le défaut des convertisseurs connus dans l'art antérieur qui ne s'arrêtent pas correctement lorsque la tension de régulation VREG OUT atteint une valeur proche de 0V. Lorsque VREG OUT atteint une valeur proche de 0V, un courant I_{L1} est toujours produit par l'inductance. Le courant ne s'annule pas et le convertisseur fonctionne toujours alors que le fonctionnement souhaité est l'arrêt définitif. Le système de régulation est instable.

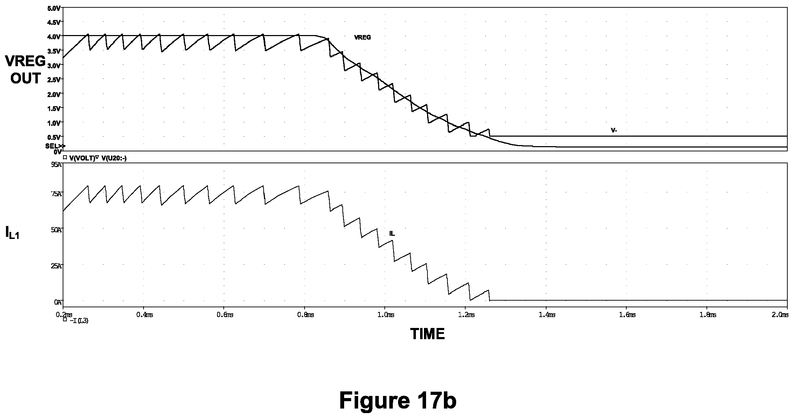

En revanche, la Figure 17b illustre l'amélioration apportée par la présente invention qui s'arrête correctement lorsque VREG OUT atteint une valeur proche de 0V (courant I_{L1}=0) car le courant s'annule grâce à l'application de la tension de décalage par le dispositif d'arrêt de génération de courant DA1. Le système de régulation est maintenant stable.

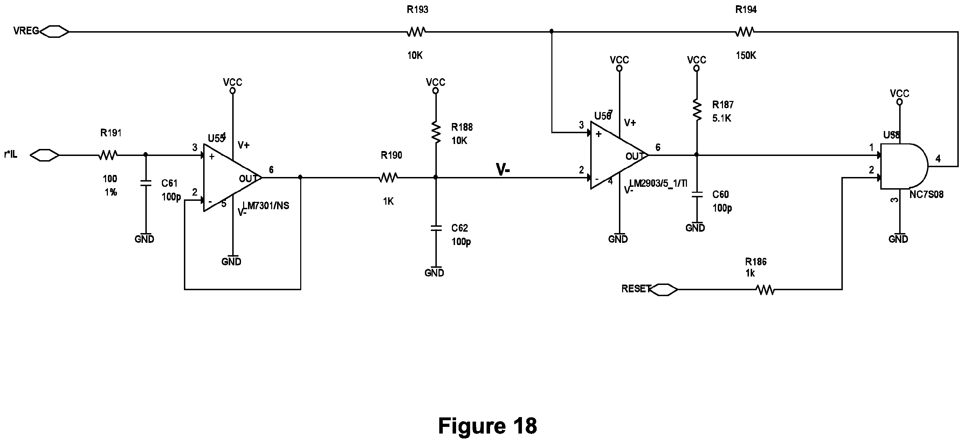

La Figure 18 illustre un exemple de réalisation du dispositif d'arrêt de génération de courant DA1.

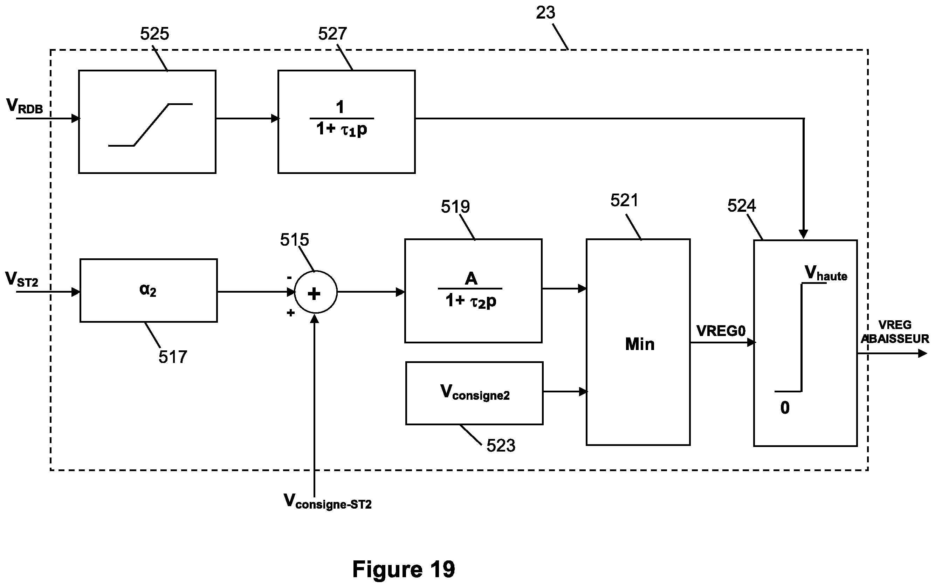

Le premier régulateur 23 pour le mode de fonctionnement mode abaisseur de tension du régulateur 11, selon un autre aspect de la présente invention, est illustré en détails sur la Figure 19.

Le premier régulateur 23 est apte à recevoir un signal de rétroaction en tension d'une tension de sortie V_{ST2} des convertisseurs (feedback), un signal de pro-action en tension d'une tension d'entrée V_{RDB} (feedforward) et un signal de consigne V_{consigne-ST2}. Le premier régulateur 23 est apte à déterminer une valeur de tension de régulation VREG ABAISSEUR à partir de la valeur de la tension de sortie V_{ST2}, de la valeur de la tension d'entrée V_{RDB} et de la valeur du signal de consigne V_{consigne-ST2}. La tension de régulation VREG ABAISSEUR est fournie au dispositif de sélection 27 qui est apte à sélectionner la tension de régulation VREG ABAISSEUR lorsque la valeur du signal SENS est égale à 0V (un niveau logique 0 et mode de fonctionnement abaisseur de tension). Ensuite, le dispositif de sélection 27 fournit la tension de régulation VREG ABAISSEUR (la tension de régulation VREG OUT) au générateur 13 pour réguler le courant traversant les inductances 17A, 17B à la valeur de la tension de régulation VREG ABAISSEUR.

Le premier régulateur 23 comprend un additionneur 515, des moyens d'atténuation 517, un correcteur Proportionnel-Intégral (PI) 519, un dispositif de comparaison 521, des moyens pour fournir une tension de consigne V_{consigne2} 523 et un limiteur de tension 524.

L'additionneur 515 est apte à réaliser une soustraction de la tension de consigne V_{consigne-ST2} à une fraction de la tension de sortie V_{ST2} (feedback) fournie par les moyens d'atténuation 517. L'erreur en sortie de l'additionneur 515 est corrigée par le correcteur Proportionnel-Intégral (PI) 519.

Le dispositif de comparaison 521 est apte à comparer la tension issue du correcteur Proportionnel-Intégral (PI) 519 et la tension de consigne V_{consigne2} fournie par les moyens pour fournir une tension de consigne 523 et à recopier en sortie la valeur minimale des deux tensions et à fournir cette tension au limiteur de tension 524 en tant que tension de régulation VREG0.

Les moyens pour fournir une tension de consigne 523 sont aptes à fournir une tension V_{consigne2} qui est une tension de réglage interne permettant de limiter la tension haute sortant du dispositif de comparaison 521 à cette valeur V_{consigne2}.

Le premier régulateur 23 comprend en outre des moyens de traitement 525 pour transformer la valeur de la tension d'entrée V_{RDB} (Feedforward), un correcteur Proportionnel-Intégral 527 (filtre temporel de premier ordre) et un limiteur de tension 529.

Les moyens de traitement 525 sont aptes à transformer la valeur de la tension d'entrée V_{RDB} selon, par exemple, une loi linéaire ou logarithmique ou par l'utilisation d'une table afin d'amplifier une réduction de la valeur de la tension d'entrée V_{RDB}. Les moyens de traitement 525 amplifient une réduction de la valeur de la tension d'entrée V_{RDB} pour qu'une valeur de la tension d'entrée V_{RDB} transformée et sortant des moyens de traitement 525 devienne rapidement une tension nulle.

Par exemple, lorsque la valeur de la tension d'entrée V_{RDB} diminue d'une valeur maximale de 13V à une valeur de 7V, la valeur de la tension d'entrée V_{RDB} transformée et sortant des moyens de traitement 525 diminue d'une valeur maximale de 4V à une valeur de 0V.

Les moyens de traitement 525 sont aptes à fournir la valeur de la tension d'entrée V_{RDB} transformée au correcteur Proportionnel-Intégral 527. Le correcteur Proportionnel-Intégral 527 est apte à effectuer un filtrage temporel (par exemple, de 10µs) et à fournir la tension d'entrée V_{RDB} transformée au limiteur de tension 524.

Le limiteur de tension 524 est configuré pour fournir la tension d'entrée V_{RDB} transformée (fournie par le correcteur Proportionnel-Intégral 527) au dispositif de sélection 27 (VREG ABAISSEUR = la tension d'entrée V_{RDB} transformée).

Le limiteur de tension 524 est en outre configuré pour fournir la tension de régulation VREG0 (fournie par le dispositif de comparaison 521) au dispositif de sélection 27 (VREG ABAISSEUR=VREG0) si la valeur de la tension de régulation VREG0 est inférieure à la valeur de la tension d'entrée V_{RDB} transformée. Ainsi, la tension maximale Vₕₐᵤₜₑ de sortie du limiteur de tension 524 est limitée à la valeur de la tension d'entrée V_{RDB} transformée fournie par le correcteur Proportionnel-Intégral 527.

Par exemple, si VREG0 est égale à 4V et la tension d'entrée V_{RDB} transformée est égale à 0V, alors, la tension maximale du limiteur de tension est égale à 0V et VREG ABAISSEUR est égale à 0V. Si VREG0 est égale à 4V et la tension d'entrée V_{RDB} transformée est égale à 2V, alors la tension maximale du limiteur de tension est égale à 2V et VREG ABAISSEUR est égale à 2V. Si VREG0 est égale à 3V et la tension d'entrée V_{RDB} transformée est égale à 4V, alors la tension maximale du limiteur de tension est égale à 4V et VREG ABAISSEUR est égale à 3V.

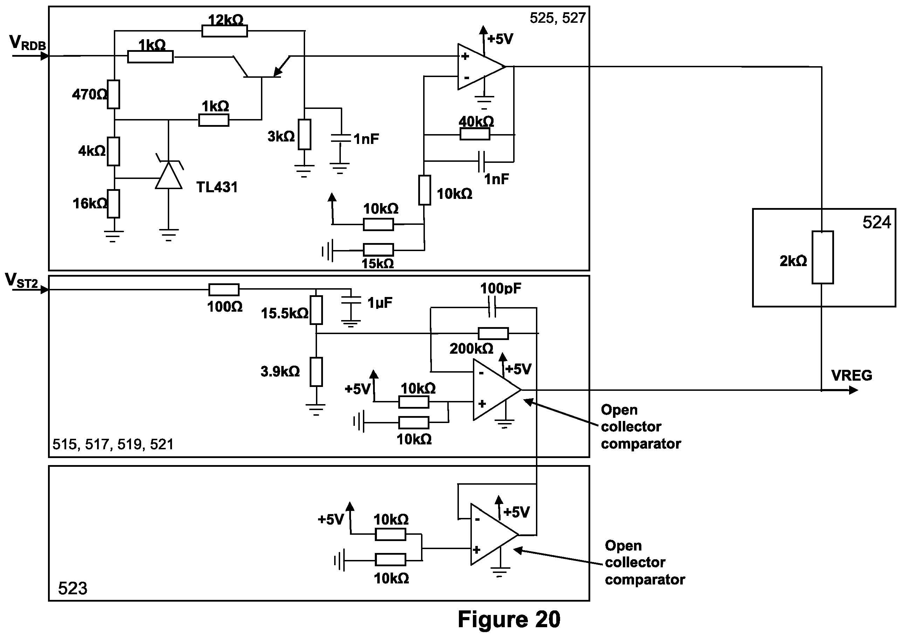

La Figure 20 illustre un exemple de réalisation analogique du premier régulateur 23 selon la présente invention. Toutefois, une réalisation en électronique numérique est également possible.

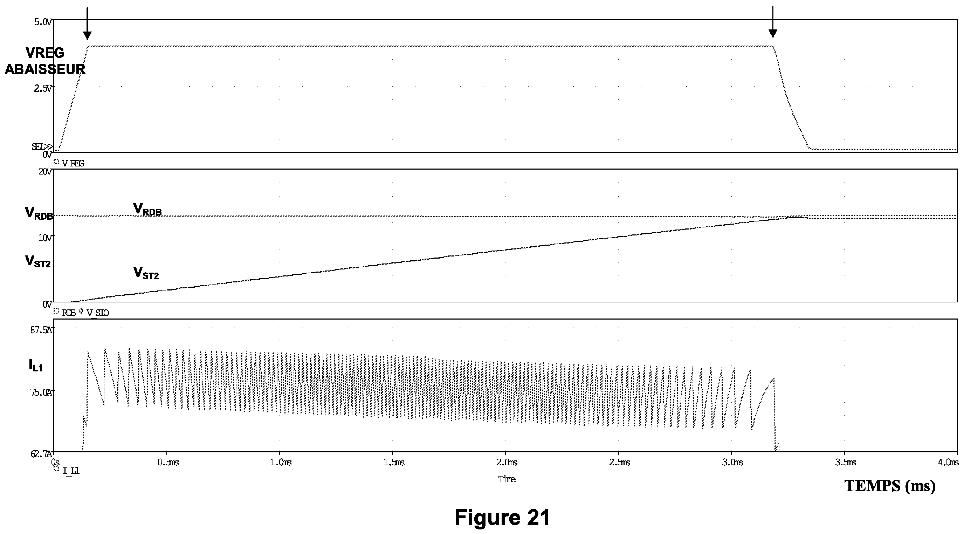

La Figure 21 illustre le courant I_{L1} traversant l'inductance 17A du convertisseur 9A lors de fonctionnement du convertisseur en mode abaisseur de tension. La valeur de la tension d'entrée du convertisseur V_{RDB} est de 13V et le convertisseur augmente la valeur de VREG ABAISSEUR afin de charger le stockeur ST2 d'une valeur de 0V à une valeur de 12V. A cette valeur de 12V, le régulateur abaisse VREG ABAISSEUR à 0V. Le convertisseur s'arrête et I_{L1} est égale à 0A.

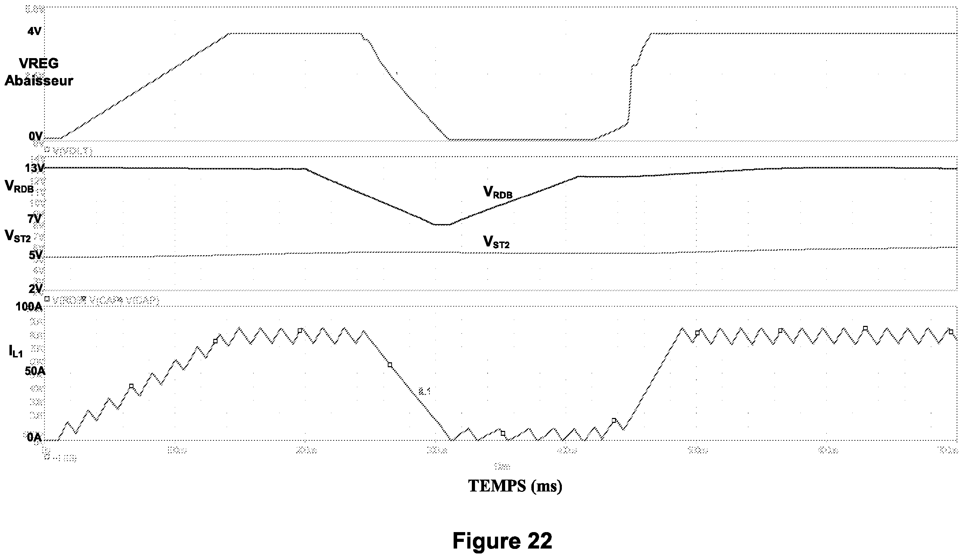

La Figure 22 illustre le cas où la valeur de la tension d'entrée du convertisseur V_{RDB} décroit. Lorsque la valeur de la tension d'entrée du convertisseur V_{RDB} passe de 13V à 7V, cette chute de V_{RDB} est amplifiée par le premier régulateur 23 afin de rapidement réduire la valeur de VREG ABAISSEUR qui devient nulle lorsque V_{RDB} = 7V.

Le dispositif 3 selon la présente invention permet de rapidement réduire le fonctionnement des convertisseurs 9A, 9B lorsque la tension d'entrée V_{RDB} change d'une manière significative évitant ainsi une régulation instable et une entrave d'une fonction sécuritaire d'un véhicule dû à une chute de la tension d'entrée V_{RDB} provoqué par le dispositif 3.

Le dispositif 3 selon la présente invention comprend ainsi un premier régulateur 23 dans lequel sont traités des signaux de consigne V_{consigne-ST2}, V_{consigne2}, un signal de rétroaction en tension de la tension de sortie et un signal de pro-action en tension de la tension d'entrée. Le signal de pro-action en tension de la tension d'entrée agit sur la loi de régulation des convertisseurs et ils sont régulés en tension et en courant. La fréquence de découpage des commutateurs n'est pas fixe car chaque convertisseur est auto-oscillant et contrôlé par la valeur du pic de courant traversant l'inductance 17A, 17B et l'hystérésis de tension fixe dans le comparateur à hystérésis 213A, 213B. Les convertisseurs travaillent à fréquence variable mais basse et inférieure à 40kHz.

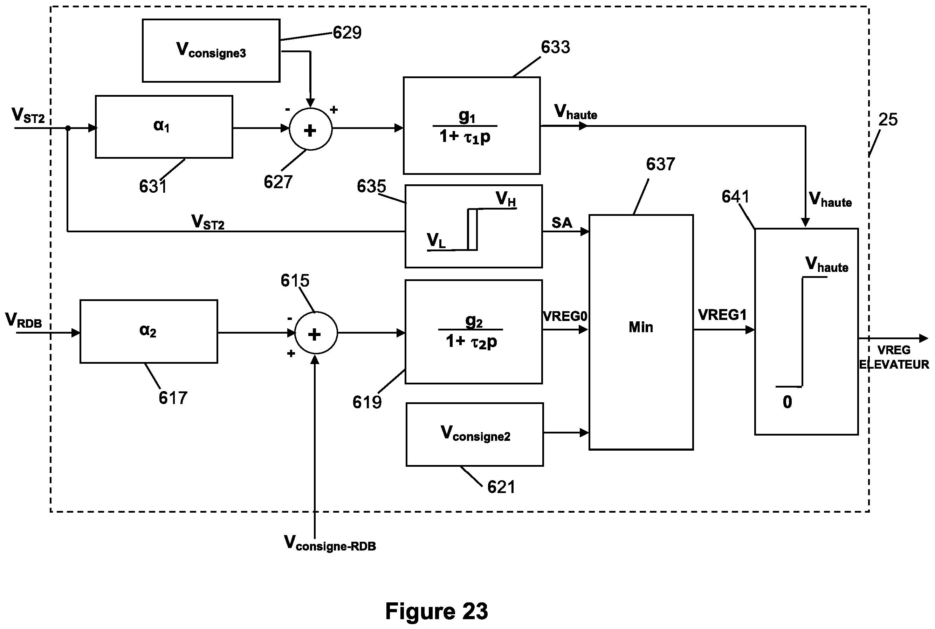

Le deuxième régulateur 25 pour le mode élévateur de tension, selon un autre aspect de la présente invention, est illustré en détails sur la Figure 23.

Le deuxième régulateur 25 est apte à recevoir un signal de rétroaction en tension d'une tension de sortie V_{RDB} des convertisseurs (feedback), un signal de pro-action en tension d'une tension d'entrée V_{ST2} (feedforward) et un signal de consigne V_{consigne-RDB}. Le deuxième régulateur 25 est apte à déterminer une valeur de tension de régulation VREG ELEVATEUR à partir de la valeur de la tension de sortie V_{RDB}, de la valeur de la tension d'entrée V_{ST2} et de la valeur du signal de consigne V_{consigne-RDB}. La tension de régulation VREG ELEVATEUR est fournie au dispositif de sélection 27 qui est apte à sélectionner la tension de régulation VREG ELEVATEUR lorsque la valeur du signal SENS est égale à 5V (un niveau logique 1 et mode de fonctionnement élévateur de tension). Ensuite, le dispositif de sélection 27 fournit la tension de régulation VREG ELEVATEUR (la tension de régulation VREG OUT) au générateur 13 pour réguler le courant traversant les inductances 17A, 17B à la valeur de la tension de régulation VREG ELEVATEUR.

Le deuxième régulateur 25 comprend un premier additionneur 615, des premiers moyens d'atténuation 617, un premier correcteur Proportionnel-Intégral (PI) 619, des moyens pour fournir une deuxième tension de consigne V_{consigne2} 621, un deuxième additionneur 627, des moyens pour fournir une troisième tension de consigne V_{consigne3} 629, des deuxièmes moyens d'atténuation 631, un deuxième correcteur Proportionnel-Intégral (PI) 633, un dispositif d'arrêt de génération du courant 635, un dispositif de comparaison 637 et un dispositif de commande 641.

Le premier additionneur 615 est apte à réaliser une soustraction de la tension de consigne V_{consigne-RDB} à une fraction de la tension de sortie V_{RDB} (feedback) fournie par les premiers moyens d'atténuation 617. L'erreur en sortie du premier additionneur 615 est corrigée par le premier correcteur Proportionnel-Intégral (PI) 619 et le résultat, représentant une valeur d'une tension de régulation VREG0, est fourni au dispositif de comparaison 637. Le premier correcteur Proportionnel-Intégral (PI) 619 est, par exemple, un filtre de premier ordre avec un gain g2.

Le dispositif d'arrêt de génération du courant 635 est apte à recevoir le signal de pro-action en tension de la tension d'entrée V_{ST2} et à générer un signal d'arrêt de génération du courant SA dans les inductances lorsque la valeur du signal de pro-action en tension atteint une valeur prédéterminée non-nulle. Le dispositif d'arrêt de génération du courant 635 est apte à comparer la valeur de la tension d'entrée V_{ST2} à une valeur prédéterminée fixée en interne VL, (par exemple, 4V). Le dispositif d'arrêt de génération du courant 635 est configuré pour fournir une tension nulle 0V (signal d'arrêt de génération du courant SA dans les inductances) au dispositif de comparaison 637 lorsque la valeur de la tension d'entrée V_{ST2} est égale ou inférieure à cette valeur prédéterminée VL. Le dispositif d'arrêt de génération du courant 635 ne fournit pas un signal au dispositif de comparaison 637 lorsque la valeur de la tension d'entrée V_{ST2} est supérieure à la valeur prédéterminée VL.

Le dispositif de comparaison 637 est apte à recevoir et à comparer le signal d'arrêt de génération du courant SA, la tension (VREG0) issue du premier correcteur Proportionnel-Intégral (PI) 619 et la tension de consigne V_{consigne2} fournie par les moyens pour fournir une deuxième tension de consigne 621, à recopier en sortie la valeur minimale des trois tensions et à fournir cette tension au dispositif de commande 641 en tant que tension de régulation VREG1. La valeur de la tension de régulation VREG1 est 0V lorsque le signal d'arrêt de génération du courant SA est reçu par le dispositif de comparaison 637.

Les moyens pour fournir une deuxième tension de consigne 621 sont aptes à fournir une tension V_{consigne2} qui est une tension de réglage interne permettant de limiter la tension haute sortant du dispositif de comparaison 637 à cette valeur V_{consigne2} (par exemple, 4V).

Le deuxième régulateur 25 comprend des moyens de traitement de la valeur de la tension d'entrée V_{ST2} aptes à transformer une diminution de la valeur de la tension d'entrée V_{ST2} en une tension de régulation croissante Vₕₐᵤₜₑ. Le deuxième additionneur 627 est apte à réaliser une soustraction de la troisième tension de consigne V_{consigne3} à une fraction de la tension d'entrée V_{ST2} (feedforward) fournie par les deuxièmes moyens d'atténuation 631. Le résultat en sortie du deuxième additionneur 627 est traité par le deuxième correcteur Proportionnel-Intégral (PI) 633 et le signal traité Vₕₐᵤₜₑ est fourni au dispositif de commande 641.

Les moyens pour fournir une troisième tension de consigne 629 sont aptes à fournir une tension V_{consigne3} qui est une tension de réglage interne (par exemple, 2V).

Le deuxième correcteur Proportionnel-Intégral (PI) 633 est, par exemple, un filtre de premier ordre avec un gain g1. Le deuxième correcteur Proportionnel-Intégral (PI) 633 est apte à transformer le résultat en sortie du deuxième additionneur 627 selon une loi linéaire décroissante afin de fournir un signal traité Vₕₐᵤₜₑ (et une tension de régulation VREG ELEVATEUR) qui décroit lorsque la valeur du résultat en sortie du deuxième additionneur 627 (et la valeur de la tension d'entrée V_{ST2}) augmente. Le deuxième correcteur Proportionnel-Intégral (PI) 633 est ainsi apte à fournir au dispositif de commande 641 un signal traité Vₕₐᵤₜₑ croissant linéairement lorsque la valeur de la tension d'entrée V_{ST2} diminue.

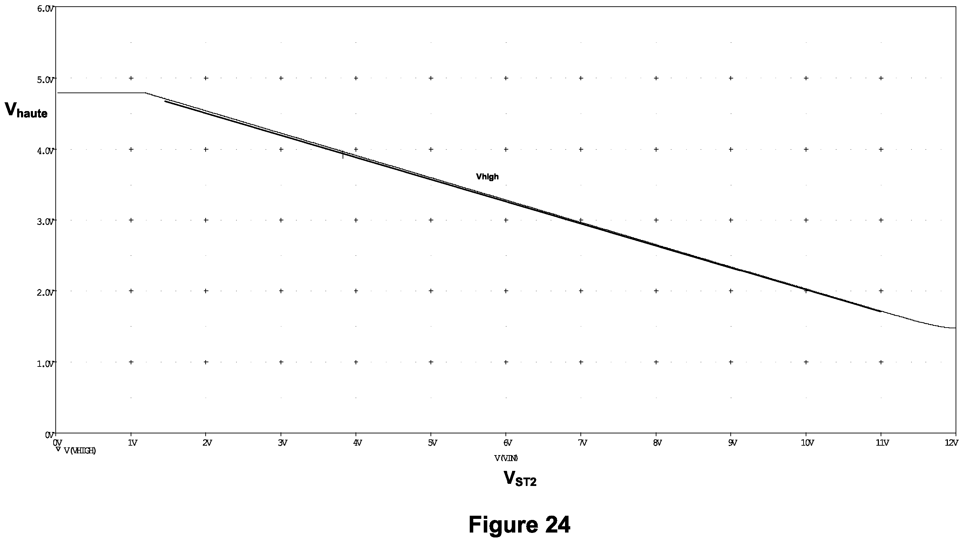

La Figure 24 illustre un exemple d'une fonction de transfert du deuxième correcteur Proportionnel-Intégral (PI) 633.

Le dispositif de commande 641 est configuré pour fournir le signal traité Vₕₐᵤₜₑ (fournie par le deuxième correcteur Proportionnel-Intégral 633) au dispositif de sélection 27 (VREG ELEVATEUR = Vₕₐᵤₜₑ).

Le dispositif de commande 641 est en outre configuré pour fournir la tension de régulation VREG1 (fournie par le dispositif de comparaison 637) au dispositif de sélection 27 (VREG ELEVATEUR = VREG1) si la valeur de la tension de régulation VREG1 est inférieure à la valeur du signal traité Vₕₐᵤₜₑ.

Ainsi, la tension maximale de sortie du dispositif de commande 641 est limitée à la valeur du signal traité Vₕₐᵤₜₑ fournie par le deuxième correcteur Proportionnel-Intégral 633. Lorsque le signal d'arrêt de génération du courant SA dans les inductances 17A, 17B (0V) est reçu par le dispositif de commande 641, par l'intermédiaire du dispositif de comparaison 637, le dispositif de commande 641 fournit une tension de régulation VREG de 0V au dispositif de sélection 27 afin d'arrêter la génération du courant traversant les inductances 17A, 17B.

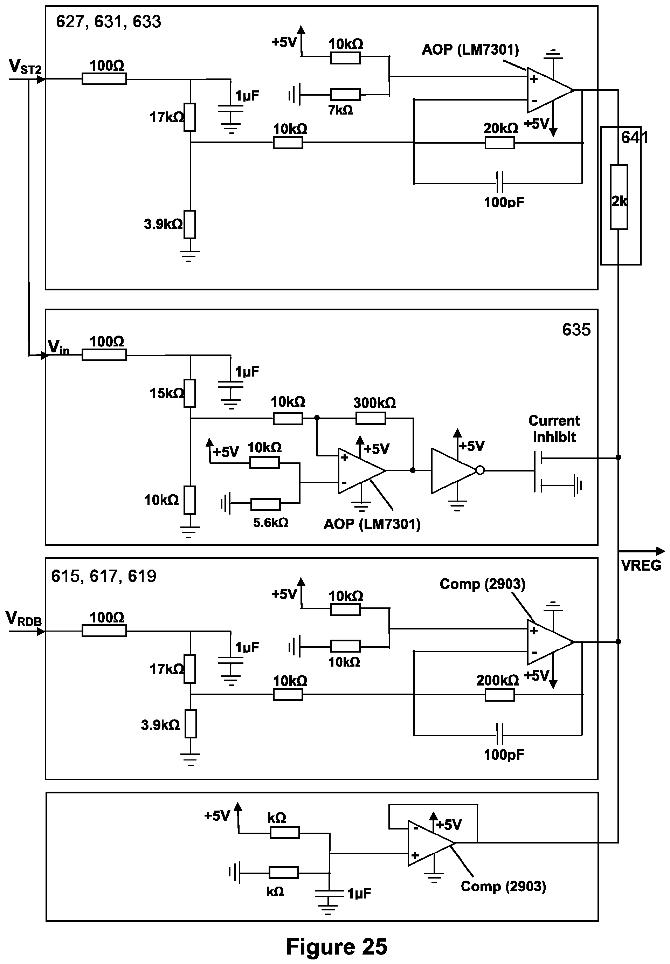

La Figure 25 illustre un exemple de réalisation analogique du deuxième régulateur 25 selon la présente invention. Toutefois, une réalisation en électronique numérique est également possible.

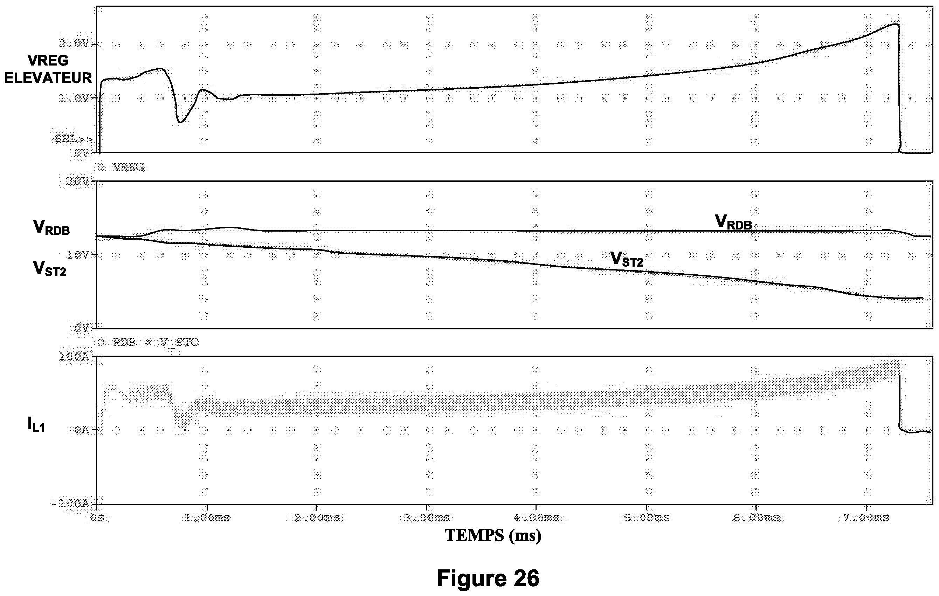

La Figure 26 illustre le courant I_{L1} traversant l'inductance 17A du convertisseur 9A lorsque la tension d'entrée V_{ST2} diminue. La valeur de la tension d'entrée du convertisseur V_{ST2} diminue d'une valeur de 12.5V à une valeur de 4V. Au cours de la réduction de la valeur de V_{ST2}, le convertisseur 9A augmente le courant I_{L1} traversant l'inductance 17A (et la valeur de VREG ELEVATEUR) afin de stabiliser la tension de sortie V_{RDB} à une valeur de 13V. Lorsque la valeur de la tension d'entrée V_{ST2} atteint une valeur de 4V, le dispositif d'arrêt de génération du courant 635 génère un signal d'arrêt de génération du courant dans l'inductance 17A et le deuxième régulateur 25 fixe la valeur de VREG ELEVATEUR à 0V. Le convertisseur s'arrête et I_{L1} est égale à 0A.

Les convertisseurs du dispositif 3 selon la présente invention permet de modifier la tension de sortie V_{RDB} et la puissance de sortie d'une manière linéaire lorsque la valeur de la tension d'entrée V_{ST2} diminue, et de maintenir une tension de sortie V_{RDB} supérieure ou égale à une valeur prédéterminée (par exemple, 12V). Il permet ainsi de fournir une tension de sortie V_{RDB} sensiblement constante. Le dispositif 3 permet en plus d'arrêter la génération du courant traversant les inductances 17A, 17B avant que la valeur de la tension d'entrée V_{ST2} n'atteigne une valeur où le fonctionnement des convertisseurs devient instable et leur rendement devient sévèrement dégradé.

Le dispositif 3 selon la présente invention comprend un deuxième régulateur 25 dans lequel sont traités des signaux de consigne V_{consigne-RDB}, V_{consigne2}, et V_{consigne3}, un signal de rétroaction en tension de la tension de sortie et un signal de pro-action en tension de la tension d'entrée. Le signal de pro-action en tension de la tension d'entrée agit sur la loi de régulation des convertisseurs et ils sont régulés en tension et en courant. La fréquence de découpage des commutateurs n'est pas fixe car les convertisseurs sont auto-oscillants et contrôlés par la valeur du pic de courant traversant les inductances 17A, 17B et l'hystérésis de tension fixe dans les comparateurs à hystérésis 213A, 213B. Les convertisseurs travaillent à fréquence variable mais basse et inférieure à 40kHz.

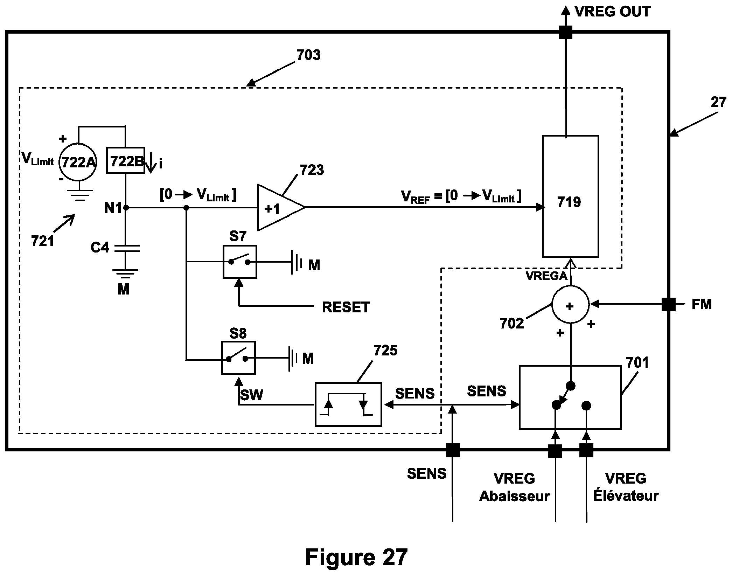

Le dispositif de sélection 27, selon un autre aspect de la présente invention, est illustré en détails sur la Figure 27.

Le dispositif de sélection 27 apte à recevoir la tension de régulation VREG ELEVATEUR fournie par le premier régulateur 23, la tension de régulation VREG ABAISSEUR fournie par le deuxième régulateur 25, le signal SENS et le signal de tension alternatif FM ayant une fréquence prédéterminée fourni par le modulateur 15. Le dispositif de sélection 27 est en outre apte à fournir la tension de régulation VREG ABAISSEUR ou la tension de régulation VREG ELEVATEUR (la tension de régulation VREG OUT) au générateur 13.

Le dispositif de sélection 27 comprend un commutateur 701, un additionneur 702 et un dispositif de protection 703.

Le commutateur 701 est apte à recevoir le signal SENS, la tension de régulation VREG ABAISSEUR et la tension de régulation VREG ELEVATEUR. Il est apte à sélectionner la tension de régulation VREG ELEVATEUR lorsque la valeur du signal SENS est égale à 5V (un niveau logique 1 et mode de fonctionnement élévateur de tension) et à fournir la tension de régulation VREG ELEVATEUR à l'additionneur 702. Le commutateur 701 est aussi apte à sélectionner la tension de régulation VREG ABAISSEUR lorsque la valeur du signal SENS est égale à 0V (un niveau logique 0 et mode de fonctionnement abaisseur de tension) et à fournir la tension de régulation VREG ABAISSEUR à l'additionneur 702.

L'additionneur 702, selon un autre aspect de la présente invention, est apte à réaliser une addition du signal de tension alternatif FM ayant une fréquence prédéterminée à la tension de régulation VREG ELEVATEUR ou à la tension de régulation VREG ABAISSEUR. Le résultat, représentant une valeur d'une tension de régulation modulé par le signal FM, est fourni au dispositif de protection 703.

Le signal FM généré par le modulateur 15 peut être un signal alternatif issu d'un générateur conventionnel tel qu'un générateur sinus carré ou triangle, ou bien issu d'une table. L'amplitude du signal est faible vis-à-vis de celle de VREG ELEVATEUR ou VREG ABAISSEUR, par exemple, 100 à 300mV, et la fréquence du signal FM est une fréquence basse par exemple, 100Hz à 1kHz. L'additionneur 702 permet une modulation de la tension de régulation VREG OUT qui permet de varier alternativement le courant de consigne I_{L1} et I_{L2} à cette fréquence de modulation imposée par le signal FM. La fréquence du rapport cyclique 1 et du rapport cyclique 2 est alors modulée en fréquence basse par le modulateur 15. Le modulateur 15 (ainsi que le dispositif de sélection 27 et le générateur 13) permet donc de générer des rapports cycliques (HS-1, LS-1, HS-2, LS-2) à fréquence variable et à bande large. Les émissions conduites et rayonnées sont donc présentes sur un spectre plus large en radiofréquence si bien qu'une conformité aux normes exigées est plus facile à atteindre.

Comme illustré sur la Figure 27, le dispositif de protection 703 inclut un limiteur de tension 719 pour fournir au générateur 13 une tension de régulation VREG OUT.

Le dispositif de protection 703 selon une autre aspect de la présente invention, est apte à limiter une variation de la valeur d'un courant généré par les convertisseurs pendant une durée prédéterminée lorsque un changement de sens de fonctionnement est détecté afin d'assurer la protection thermique des convertisseurs. Il est en outre aptes à détecter une mise en alimentation des convertisseurs et à limiter une variation de la valeur d'un courant généré par les convertisseurs pendant une durée prédéterminée lorsque cette mise en alimentation est détecté.

Le dispositif de protection 703 comprend en outre un générateur 721 relié électriquement à un condensateur C4 par l'intermédiaire d'un nœud N1, et des commutateurs S7 et S8. Le générateur 721 inclut une source de tension 722A et un générateur de courant 722B. Chaque commutateur S7, S8 est relié électriquement d'un côté au nœud N1 (entre le générateur 721 et le condensateur C4) et de l'autre côté à la masse M. Le limiteur de tension 719 est relié électriquement au nœud N1 par l'intermédiaire d'un amplificateur 723.

Le limiteur de tension 719 est en outre apte à recevoir le résultat (la tension de régulation VREGA) de l'addition du signal de tension alternatif FM à la tension de régulation VREG ELEVATEUR ou à la tension de régulation VREG ABAISSEUR effectué par l'additionneur 702.

Le commutateur S7 est apte à recevoir le signal RESET lors d'une mise en alimentation du dispositif 3 et à fermer le commutateur S7 lorsque le signal est reçu. Un dispositif 725 est apte à recevoir le signal SENS lorsque un changement du mode abaisseur de tension au mode élévateur de tension (ou vice versa) est effectué, et à détecter un front montant ou descendant du signal SENS afin de fermer le commutateur S8 (par l'intermédiaire d'un signal SW).

Dans une variante de la présente invention, le convertisseur 1 inclut des moyens pour détecter une inversion du courant circulant dans l'inductance 17A, 17B et pour fermer le commutateur S8 lorsqu'une inversion du courant est détectée.

Le générateur 721 charge en courant le condensateur C4. La tension aux bornes de C4 est égale à 0 si le commutateur S7 est fermé, c'est-à-dire durant un temps de RESET (réveil des alimentations internes) ou si le commutateur S8 est fermé, c'est-à-dire à chaque transition positive et négative du signal SENS détecté par le dispositif 725.

Ensuite, la tension aux bornes de C4 monte, par exemple, linéairement (ou autre fonction) jusqu'à la valeur limite de V_{Limit} (par exemple +4V) durant un temps de transition établi par les valeurs de la capacité du C4 et le courant i fourni par le générateur de courant 722B, par exemple 0,2 ms.

Cette tension est recopiée par l'amplificateur 723 avec un gain de +1 et fournie en tant que tension de référence V_{REF} au limiteur de tension 719.

Le limiteur de tension 719 est configuré pour fournir cette tension de référence montant de 0V jusqu'à la valeur limite de V_{Limit} au générateur 13 (VREG OUT= 0 à V_{Limit}).

Ainsi, la tension maximale du limiteur de tension 719 peut prendre les valeurs suivantes :
- 0V durant une mise en alimentation ;
- entre 0 et 4V après un changement de mode de fonctionnement durant le temps de transition (par exemple 0,2 ms) ; et
   V_{Limit} = 4V permanant si un signal RESET ou SENS n'est pas reçu.

Le limiteur de tension 719 est en outre configuré pour fournir la tension de régulation VREGA fournie par l'additionneur 702 au générateur 13 (VREG OUT=VREGA) si la valeur de la tension de régulation VREGA est inférieure à la valeur de la tension de référence V_{REF}.

Par exemple, si VREGA est égale à 4V et la tension de référence V_{REF} est égale à 0V, alors, la tension maximale du limiteur de tension est égale à 0V et VREG OUT est égale à 0V. Si VREGA est égale à 4V et la tension de référence V_{REF} est égale à 2V, alors la tension maximale du limiteur de tension est égale à 2V et VREG OUT est égale à 2V. Si VREGA est égale à 3V et la tension de référence V_{REF} est égale à 4V, alors la tension maximale du limiteur de tension est égale à 4V et VREG OUT est égale à 3V.

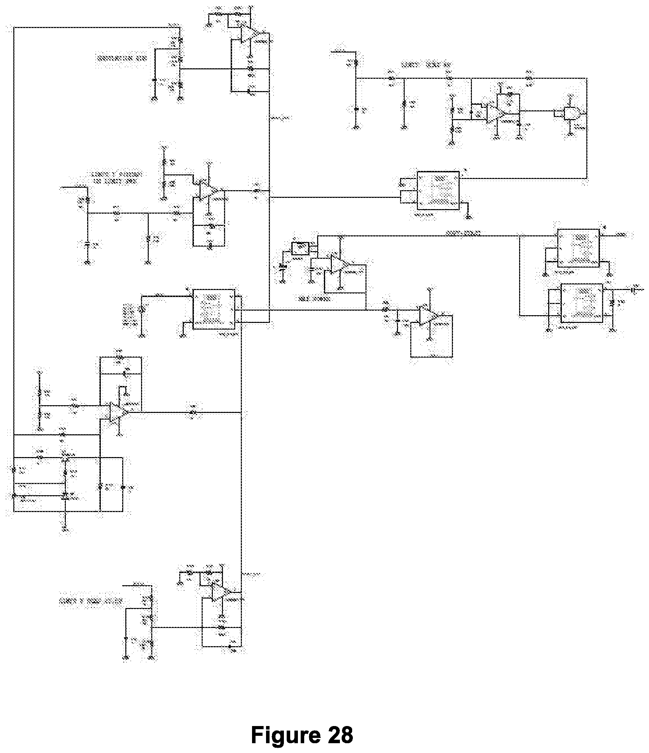

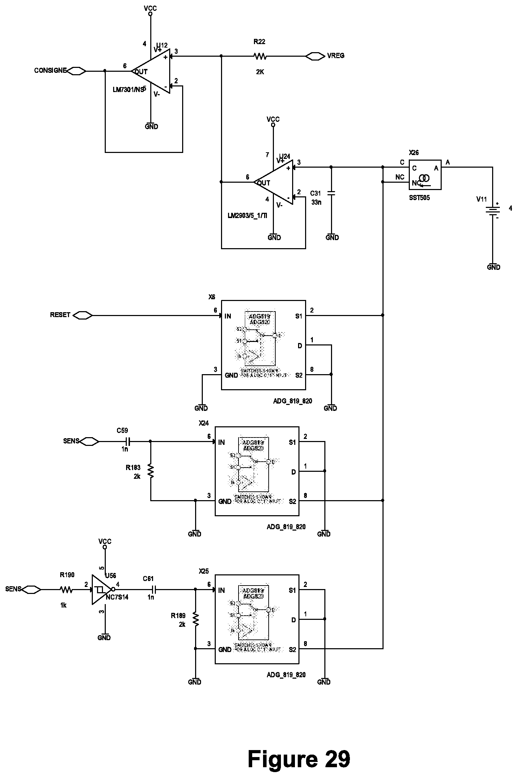

La Figure 28 illustre un exemple de réalisation du régulateur selon la présente invention. La Figure 29 illustre un exemple de réalisation du dispositif de protection 703 selon la présente invention.

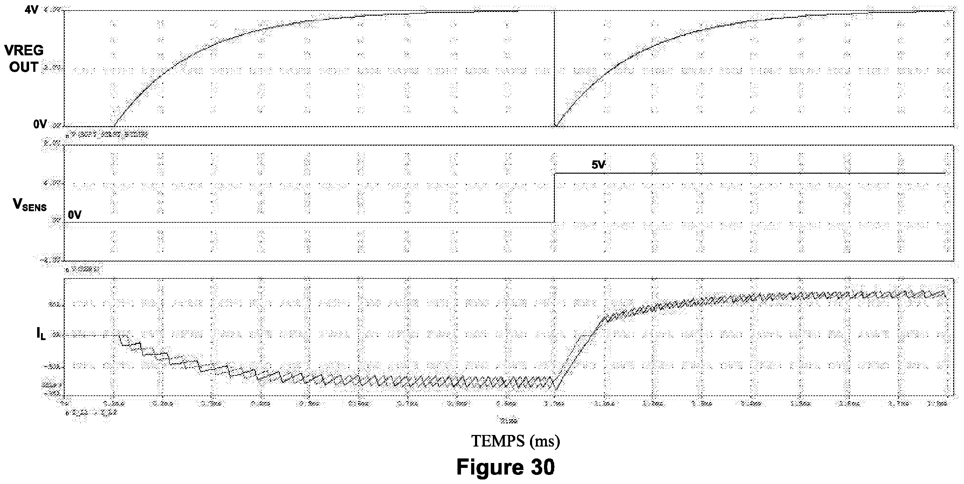

La Figure 30 illustre l'évolution du courant traversant les inductances suite à un changement du mode de fonctionnement des convertisseurs. Lorsque le signal SENS passe de 0V à 5V signalant un changement du mode de fonctionnement, la tension de régulation VREG OUT est limitée par le limiteur de tension 719 et elle prend la valeur de 0V. La tension de régulation VREG OUT augmente progressivement à partir de cette valeur de 0V jusqu'à V_{Limit} (par exemple, 4V) pendant une durée prédéterminée. Le sens de circulation du courant IL est inversé mais la valeur du courant IL n'augmente pas brutalement et augmente selon la valeur de la tension de régulation VREG1.

Ceci évite une montée de température abrupte dans les éléments électroniques de chaque convertisseur et la puissance dissipée transitoire des commutateurs est limitée à une valeur prédéfinie, cette valeur étant déterminée par le générateur 721 et le condensateur C4.

La puissance dissipée continue est limitée par la valeur de V_{Limit} et le gradient en température de jonction transitoire est limité à une valeur prédéfinie et compatible avec des objectifs de fiabilité et durabilité des composants semi-conducteurs des convertisseurs.

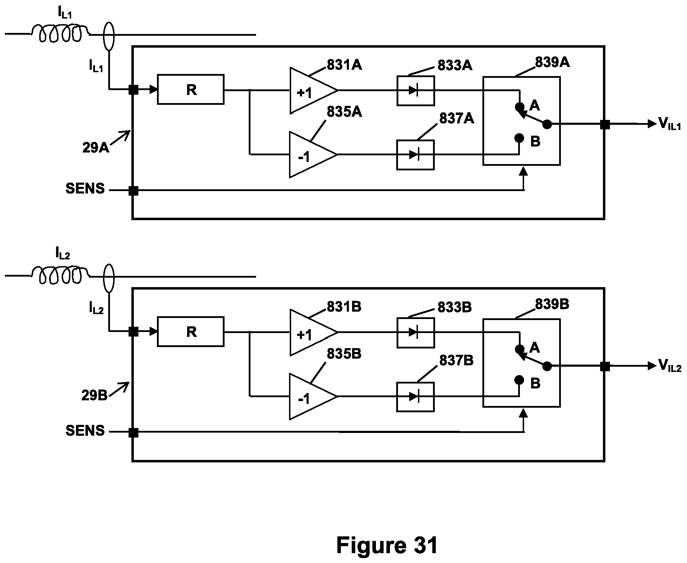

Les moyens 29A, 29B pour fournir respectivement une tension V_{L1} et une tension V_{L2} (une image du courant I_{L1} et I_{L2}) représentative du courant I_{L1} et I_{L2} traversant respectivement l'inductance 17A et l'inductance 17B sont illustrés dans la Figure 31.

Les moyens 29A et les moyens 29B sont identiques et configurés pour déterminer une valeur absolue d'une tension VL.

Les moyens 29A comprennent un convertisseur linéaire courant / tension de gain R, un amplificateur 831A de gain +1, un détecteur crête suiveur 833A, un amplificateur 835A de gain -1, un détecteur crête suiveur 837A et un commutateur 839A.

Les moyens 29A comprennent le convertisseur linéaire courant / tension de gain R afin de convertir un échantillonnage du courant I_{L1} traversant l'inductance 17A en une tension V_{L1}. Une image du courant I_{L1} est ainsi réalisé. Nous avons en sortie du convertisseur linéaire courant/tension de gain R une tension égale à V= R X I_{L1}.

Toutefois, cette tension est positive ou négative selon le sens de fonctionnement des convertisseurs (abaisseur de tension ou élévateur de tension).

Une tension positive est traitée par l'amplificateur 831A de gain +1 et le détecteur crête suiveur 833A. Une tension négative est traitée l'amplificateur 835A de gain -1 et le détecteur crête suiveur 837A. Le commutateur 839A est apte à recevoir le signal SENS et une position A ou B du commutateur 839A est changée à chaque transition positive et négative du signal SENS détecté par le commutateur 839A.

En prenant par exemple R = 0.060 ohm, I_{L1} = +50A et SENS = 1 alors V en sortie du détecteur crête suiveur 833A = 0.06x50x1x1= 3.0V, en sortie du détecteur crête suiveur 837A = (0.06x50)x0x-1 = 0V et alors la sortie du commutateur 839A = la tension en sortie du détecteur crête suiveur 833A = 3.0V.

En prenant par exemple R = 0.060 ohm, et I_{L1} = -50A et SENS = 0 alors V en sortie du détecteur crête suiveur 833A = 0.06 x -50 x0= 0V, en sortie du détecteur crête suiveur 837A = (0.06x-50)x-1x1 = 3.0V et alors la sortie du commutateur 839A = tension en sortie du détecteur crête suiveur 837A= 3.0V.

Lors d'un changement de sens de fonctionnement des convertisseurs (abaisser de tension vers élévateur de tension), le courant I_{L1} et I_{L2} diminuent vers 0A puis changent de valeur et augment pour attendre leurs valeurs de consigne. Les moyens 29A et 29B permettent d'obtenir en sortie du commutateur 839A la valeur positive ou nulle de la tension V_{L1} représentative du courant I_{L1} traversant l'inductance 17A, et en sortie du commutateur 839B la valeur positive ou nulle de la tension V_{L2} représentative du courant I_{L2} traversant l'inductance 17B.

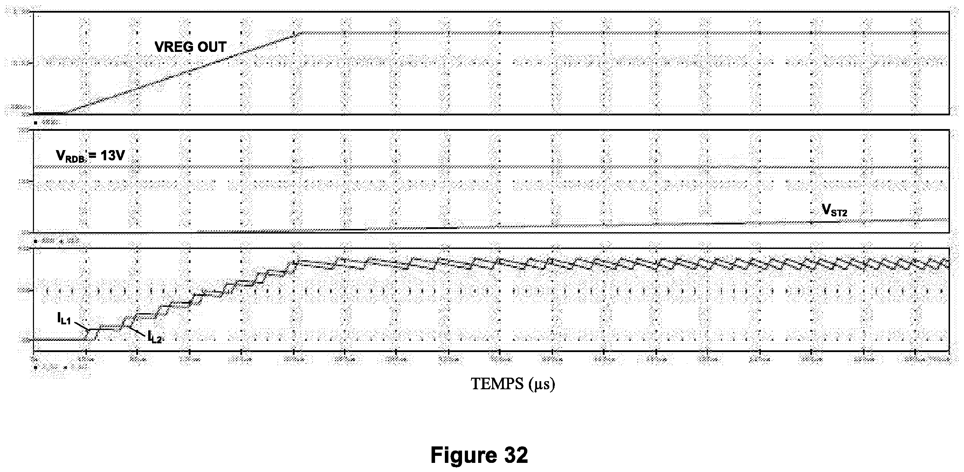

La Figure 32 illustre le fonctionnement du système illustré dans la Figure 1 lors du démarrage des convertisseurs fonctionnant en mode abaisseur de tension. La tension VREG OUT monte d'une valeur de 0V à une valeur de 4V en 200µs. La valeur de la tension V_{RDB} est de 13V et le stockeur d'énergie ST2 se charge d'une valeur de 0V à une valeur de 12V. Les courants I_{L1} et I_{L2} montent d'une valeur de 0A à une valeur de 75A asservis à la tension de consigne VREG OUT.

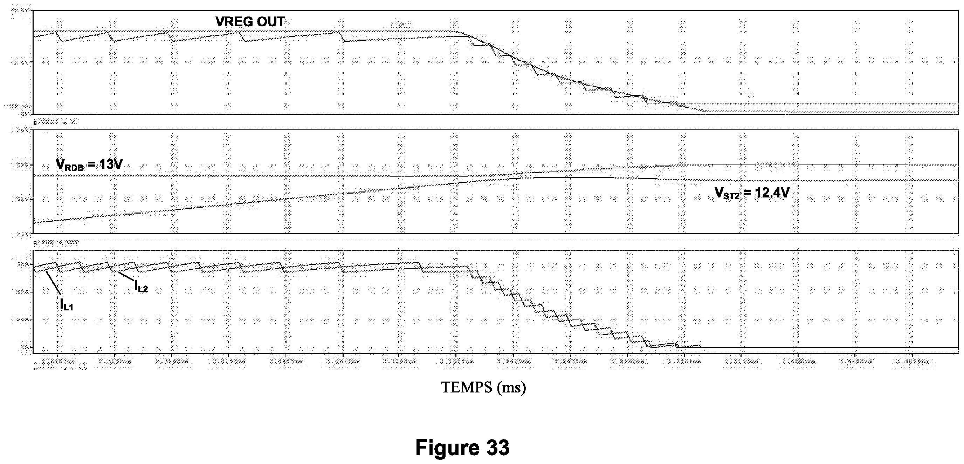

La Figure 33 illustre le fonctionnement du système illustré dans la Figure 1 lors de l'arrêt des convertisseurs fonctionnant en mode abaisseur de tension. La tension VREG OUT diminue d'une valeur de 4V vers une valeur de 0V en raison de la fin de recharge du stockeur d'énergie ST2 et la tension appliquée par le dispositif d'arrêt DA1, DA2. La valeur de la tension V_{RDB} est de 13V et le stockeur d'énergie ST2 est chargé à une valeur de 12.4V. Les courants I_{L1} et I_{L2} diminuent d'une valeur de 75A à une valeur de 0A asservis à la tension de consigne VREG OUT.

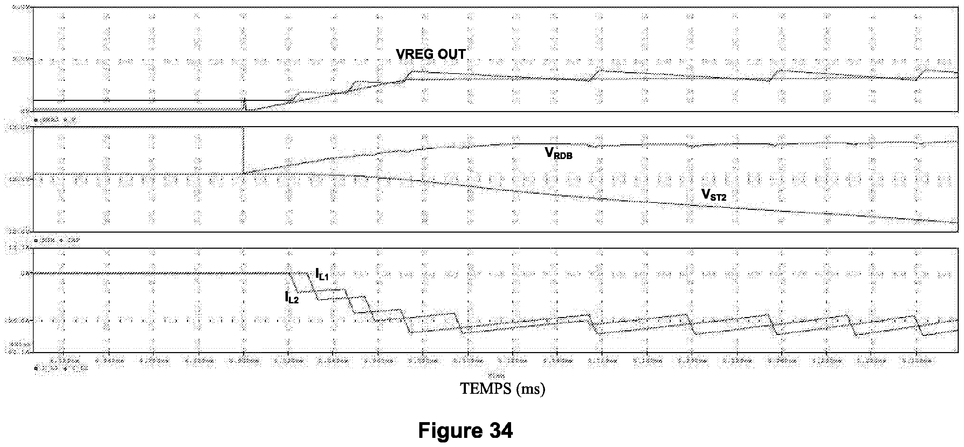

La Figure 34 illustre le fonctionnement du système illustré dans la Figure 1 lors du démarrage des convertisseurs fonctionnant en mode élévateur de tension. La tension VREG OUT monte d'une valeur de 0V vers une valeur de 1.5V. La valeur de la tension V_{RDB} est de 13V et le stockeur d'énergie ST2 se décharge d'une valeur de 12.4V à une valeur de 4V.

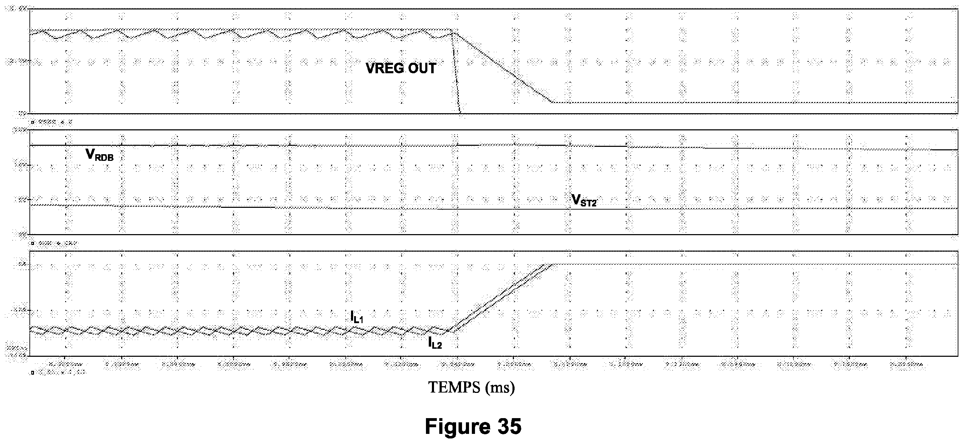

La Figure 35 illustre le fonctionnement du système illustré dans la Figure 1 lors de l'arrêt des convertisseurs fonctionnant en mode élévateur de tension. La tension VREG OUT diminue d'une valeur de 4V vers une valeur de 0V en raison de la fin de décharge de stockeur d'énergie ST2 et la tension appliquée par le dispositif d'arrêt DA1, DA2. La valeur de la tension V_{RDB} est de 13V et le stockeur d'énergie ST2 termine sa décharge à une valeur de 4V. Les courants I_{L1} et I_{L2} diminuent d'une valeur de -75A à une valeur de 0A asservis à la tension de consigne VREG OUT.

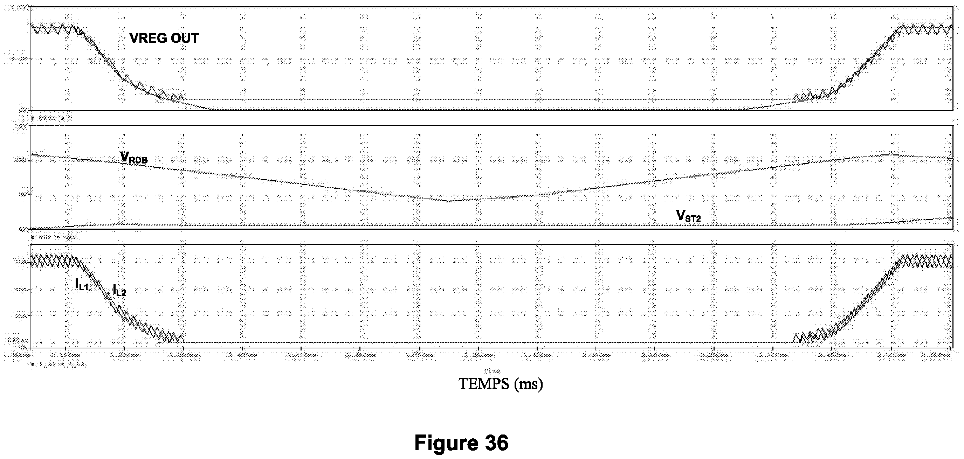

La Figure 36 illustre l'effet du signal de pro-action en tension lors du fonctionnement du système illustré dans la Figure 1 lorsque les convertisseurs fonctionnent en mode abaisseur de tension (recharge du stockeur d'énergie ST2). La tension V_{RDB} chute d'une valeur de 13V vers une valeur de 7V et puis remonte à une valeur de 13V. La tension VREG OUT diminue d'une valeur de 4V vers une valeur de 0V en raison de l'effet du signal de pro-action en tension et la tension appliquée par le dispositif d'arrêt DA1, DA2. Les courants I_{L1} et I_{L2} diminuent d'une valeur de 75A vers une valeur de 0A asservis à la tension de consigne VREG OUT.

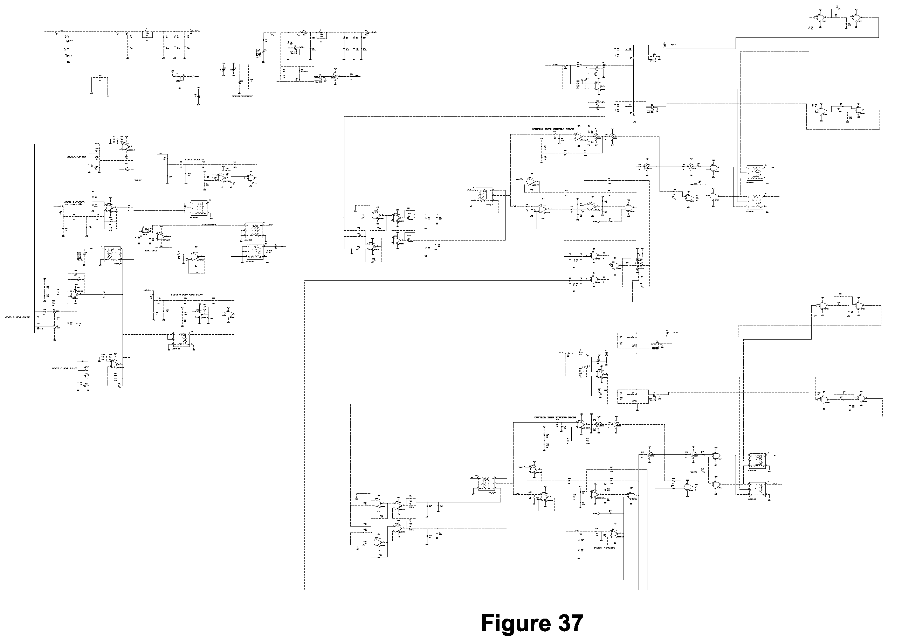

La Figure 37 illustre un exemple de réalisation du dispositif d'alimentation 3 selon la présente invention.

On comprendra que diverses modifications et / ou améliorations évidentes pour l'homme du métier peuvent être apportées aux différents modes de réalisation de l'invention décrits dans la présente description sans sortir du cadre de l'invention défini par les revendications annexées.

Par exemple, le système peut comprendre plus de deux convertisseurs et le dispositif de synchronisation peut synchroniser plus de deux convertisseurs.

## Revendications

1. Dispositif d'alimentation (3) pour alimenter un réseau de bord d'un véhicule en énergie électrique comprenant :
• au moins deux convertisseurs (9A, 9B) courant continu/courant continu entrelacés et réversibles entre un mode de fonctionnement abaisseur de tension et un mode de fonctionnement élévateur de tension, les convertisseurs (9A, 9B) étant destinés à être reliés à un stockeur d'énergie électrique (ST2) et aptes à fournir un courant au réseau de bord ;
• un interrupteur (K) permettant à une source d'énergie électrique (ST1) d'alimenter le réseau de bord lorsque l'interrupteur (K) est dans un premier état, et permettant au stockeur d'énergie électrique (ST2) d'alimenter le réseau de bord lorsque l'interrupteur (K) est dans un deuxième état,
**caractérisé en ce que** les convertisseurs (9A, 9B) sont des convertisseurs à fréquence variable, et **en ce que** le dispositif d'alimentation (3) comprend en outre un dispositif de synchronisation (200) configuré pour synchroniser le fonctionnement des convertisseurs (9A, 9B) opérant à des fréquences variables et la génération du courant des convertisseurs, ledit dispositif de synchronisation (200) comprenant :
• des moyens de réception (221A, 221B, 223A, 223B) pour recevoir un signal de commutation généré par chacun des convertisseurs ;
• des moyens (225) pour détecter un type de transition des signaux de commutation reçus ;
• des moyens (227) pour générer un signal de synchronisation lorsqu'une transition est détectée ;
• des moyens (227, 2S1, 2S2) pour fournir le signal de synchronisation à l'un des convertisseurs (9A, 9B), lesdits moyens (227, 2S1, 2S2) étant configurés pour fournir le signal de synchronisation à un convertisseur (5A, 5B) différent et dans un ordre successif chaque fois qu'une transition est détectée ; et
• des moyens de démarrage de synchronisation (231) aptes à fournir un signal de synchronisation à un convertisseur prédéterminé (9A, 9B) incluant des moyens pour recevoir une valeur d'un courant traversant une inductance (17A,17B) d'un convertisseur parmi les convertisseurs (9A,9B) et des moyens (232, 227) pour générer un signal de démarrage de synchronisation (START SYNCHRO) lorsque la valeur dudit courant atteint une valeur prédéterminée.

2. Dispositif (3) selon la revendication 1, **caractérisé en ce que** les moyens de réception incluent un circuit différentiateur (221A, 221B) pour traiter le signal de commutation reçu de chacun des convertisseurs (9A, 9B).

3. Dispositif (3) selon l'une quelconque des revendications 1 ou 2, **caractérisé en ce que** les moyens pour détecter un type de transition des signaux de commutation incluent un circuit OU (225).

4. Dispositif (3) selon l'une quelconque des revendications 1 à 3, **caractérisé en ce que** les moyens pour générer un signal de synchronisation lorsqu'une transition est détectée incluent une bascule D (227).

5. Dispositif (3) selon l'une quelconque des revendications 1 à 4, **caractérisé en ce qu'**il inclut le stockeur d'énergie électrique (ST2).

6. Système (1 ;100) comprenant le dispositif (3) selon l'une quelconque des revendications 1 à 5, une source d'énergie électrique (ST1) reliée au dispositif (3), et un réseau de bord (RDB) relié au dispositif (3), le réseau de bord incluant un calculateur (5) et au moins un appareil consommateur d'énergie électrique (7).

7. Véhicule automobile comprenant le dispositif (3) selon l'une quelconque des revendications 1 à 5, ou le système selon la revendication précédente.

## Patentansprüche

1. Versorgungsvorrichtung (3) zum Versorgen eines Bordnetzes eines Kraftfahrzeugs mit elektrischer Energie, die Folgendes umfasst:
• mindestens zwei Gleichstrom-/Wechselstromwandler (9A, 9B), die verschachtelt und zwischen einem Betriebsmodus zum Senken der Spannung und einem Betriebsmodus zum Erhöhen der Spannung umkehrbar sind, wobei die Wandler (9A, 9B) dazu bestimmt sind, mit einem Speicher elektrischer Energie (ST2) verbunden zu sein, und geeignet sind, um zu dem Bordnetz einen Strom zu liefern;
• einen Schalter (K), der es einer Quelle elektrischer Energie (ST1) erlaubt, das Bordnetz zu versorgen, wenn der Schalter (K) in einem ersten Zustand ist, und es dem Speicher elektrischer Energie (ST2) erlaubt, das Bordnetz zu versorgen, wenn der Schalter (K) in einem zweiten Zustand ist,
**dadurch gekennzeichnet, dass** die Wandler (9A, 9B) Wandler mit variabler Frequenz sind, und dass die Versorgungsvorrichtung (3) außerdem eine Synchronisationsvorrichtung (200) umfasst, die konfiguriert ist, um den Betrieb der Wandler (9A, 9B), die mit variablen Frequenzen funktionieren, und die Erzeugung des Stroms der Wandler zu synchronisieren, wobei die Synchronisationsvorrichtung (200) Folgendes umfasst:
• Empfangsmittel (221A, 221B, 223A, 223B) zum Empfangen eines Umschaltsignals, das von jedem der Wandler erzeugt wird;
• Mittel (225) zum Erfassen eines Übergangstyps der empfangenen Umschaltsignale;
• Mittel (227) zum Erzeugen eines Synchronisationssignals, wenn ein Übergang erfasst wird;
• Mittel (227, 2S1, 2S2), um das Synchronisationssignal zu einem der Wandler (9A, 9B) zu liefern, wobei die Mittel (227, 2S1, 2S2) konfiguriert sind, um das Synchronisationssignal zu einem unterschiedlichen Wandler (5A, 5B) und in einer sukzessiven Reihenfolge jedes Mal, wenn ein Übergang erfasst wird, zu liefern; und
• Synchronisationsstartmittel (231), die geeignet sind, ein Synchronisationssignal zu einem vorbestimmten Wandler (9A, 9B) zu liefern, der Mittel beinhaltet, um einen Wert eines Stroms zu empfangen, der eine Drosselspule (17A, 17B) eines Wandlers der Wandler (9A, 9B) durchquert, und Mittel (232, 227) zum Erzeugen eines Synchronisationsstartsignals (START SYNCHRO), wenn der Wert des Stroms einen vorbestimmten Wert erreicht.

2. Vorrichtung (3) nach Anspruch 1, **dadurch gekennzeichnet, dass** die Empfangsmittel eine Differenziererschaltung (221A, 221B) beinhalten, um das Umschaltsignal, das von jedem der Wandler (9A, 9B) empfangen wird, zu verarbeiten.

3. Vorrichtung (3) nach einem der Ansprüche 1 oder 2, **dadurch gekennzeichnet, dass** die Mittel zum Erfassen eines Übergangstyps der Umschaltsignale eine ODER-Schaltung (225) beinhalten.

4. Vorrichtung (3) nach einem der Ansprüche 1 bis 3, **dadurch gekennzeichnet, dass** die Mittel zum Erzeugen eines Synchronisationssignals, wenn ein Übergang erfasst wird, einen Flip-Flop D (227) beinhalten.

5. Vorrichtung (3) nach einem der Ansprüche 1 bis 4, **dadurch gekennzeichnet, dass** sie den Speicher elektrischer Energie (ST2) beinhaltet.

6. System (1; 100), das die Vorrichtung (3) nach einem der Ansprüche 1 bis 5, eine Quelle elektrischer Energie (ST1), die mit der Vorrichtung (3) verbunden ist, und ein Bordnetz (RDB), das mit der Vorrichtung (3) verbunden ist, umfasst, wobei das Bordnetz einen Rechner (5) und mindestens ein Gerät, das elektrische Energie verbraucht (7), beinhaltet.

7. Kraftfahrzeug, das die Vorrichtung (3) nach einem der Ansprüche 1 bis 5 oder das System gemäß dem vorstehenden Anspruch umfasst.

## Claims

1. A power supply unit (3) for supplying electrical energy to an on-board network of a vehicle, including:
• at least two direct current/direct current converters (9A, 9B) which are interlaced and reversible between a step-down voltage operating mode and a step-up voltage operating mode, the converters (9A, 9B) being intended to be connected to an electrical energy storage device (ST2) and able to provide a current to the on-board network;
• a switch (K) enabling a source of electrical energy (ST1) to supply the on-board network when the switch (K) is in a first state, and enabling the electrical energy storage device (ST2) to supply the on-board network when the switch (K) is in a second state,
**characterized in that** the converters (9A, 9B) are variable frequency converters, and **in that** the supply unit (3) further includes a synchronisation device (200) configured to synchronise the operation of the converters (9A, 9B) operating at variable frequencies and the current generation of the converters, said synchronisation device (200) including:
• reception means (221A, 221B, 223A, 223B) for receiving a switching signal generated by each of the converters;
• means (225) for detecting a transition type of the received switching signals;
• means (227) for generating a synchronisation signal when a transition is detected;
• means (227, 2S1, 2S2) for providing the synchronisation signal to one of the converters (9A, 9B), said means (227, 2S1, 2S2) being configured to provide the synchronisation signal to a different converter (5A, 5B) and in a successive order each time a transition is detected; and
• synchronisation start-up means (231) able to provide a synchronisation signal to a predetermined converter (9A, 9B) including means for receiving a value of a current passing through an inductance (17A, 17B) of one converter among the converters (9A, 9B), and means (232, 227) for generating a synchronisation start-up signal (START SYNCHRO) when the value of said current reaches a predetermined value.

2. The device (3) according to Claim 1, **characterized in that** the reception means include a differentiating circuit (221A, 221B) for processing the received switching signal of each of the converters (9A, 9B).

3. The device (3) according to any one of Claims 1 or 2, **characterized in that** the means for detecting a transition type of the switching signals include an OR circuit (225).

4. The device (3) according to any one of Claims 1 to 3, **characterized in that** the means for generating a synchronisation signal when a transition is detected include a D flip-flop (227).

5. The device (3) according to any one of Claims 1 to 4, **characterized in that** it includes the electrical energy storage device (ST2).

6. A system (1; 100) including the device (3) according to any one of Claims 1 to 5, an electrical energy source (ST1) connected to the device (3), and an on-board network (RDB) connected to the device (3), the on-board network including a computer (5) and at least one consumer device (7) of electrical energy.

7. A motor vehicle including the device (3) according to any one of Claims 1 to 5, or the system according to the preceding claim.
